# EUROPÄISCHE PATENTSCHRIFT

(11) **EP 3 216 182 B1**
(45) Veröffentlichungstag und Bekanntmachung des Hinweises auf die Patenterteilung: **05.12.2018**
(21) Anmeldenummer: 15790126.5
(22) Anmeldetag: 03.11.2015
(51) Int. Cl.: H04L 25/03, H04L 25/497

(54) **SENDEEINRICHTUNG ZUM SENDEN EINES AUSGANGSSIGNALS, EMPFANGSEINRICHTUNG ZUM EMPFANGEN EINES AUSGANGSSIGNALS UND VERFAHREN ZUM SENDEN BEZIEHUNGSWEISE EMPFANGEN DERSELBEN**
TRANSMITTER FOR SENDING AN OUTPUT SIGNAL, RECEIVER FOR RECEIVING AN OUTPUT SIGNAL AND METHOD FOR SENDING AND RECEIVING OF AN OUTPUT SIGNAL, RESPECTIVELY
ÉMETTEUR POUR ÉMETTRE UN SIGNAL DE SORTIE, RÉCEPTEUR POUR REÇEVOIR UN SIGNAL DE SORTIE ET PROCÉDÉ POUR ÉMETTRE ET REÇEVOIR, RESPECTIVEMENT, UN SIGNAL DE SORTIE

(30) Priorität: 04.11.2014 DE 102014222511
(43) Veröffentlichungstag der Anmeldung: 13.09.2017
(73) Patentinhaber: Fraunhofer-Gesellschaft zur Förderung der angewandten Forschung e.V., 80686 München (DE)
(72) Erfinder: HILDINGER, Rainer, 96049 Bamberg (DE); TASCH, Andreas, 83278 Traunstein (DE); ZAREI, Shahram, 91080 Uttenreuth (DE); ZERNA, Conrad, 90429 Nürnberg (DE); DÄUMLER, Matthias, 91054 Erlangen (DE); RUIZ CABRERA, Carlos, 90408 Nürnberg (DE); KOCH, Robert, 91058 Erlangen (DE)
(74) Vertreter: Zimmermann, Tankred Klaus
(86) Internationale Anmeldenummer: PCT/EP2015/075601
(87) Internationale Veröffentlichungsnummer: WO 2016/071339

(56) Entgegenhaltungen:
- YONGRU GU ET AL: "High-Speed Architecture Design of Tomlinson-Harashima Precoders", IEEE TRANSACTIONS ON CIRCUITS AND SYSTEMS I: REGULAR PAPERS, IEEE, US, Bd. 54, Nr. 9, 1. September 2007 (2007-09-01), Seiten 1929-1937, XP011192231, ISSN: 1549-8328, DOI: 10.1109/TCSI.2007.904688

## Beschreibung

Die vorliegende Erfindung bezieht sich auf eine Sendeeinrichtung zum Senden eines Ausgangssignals, auf eine Empfangseinrichtung zum Empfangen eines Ausgangssignals sowie auf Verfahren zum Senden oder Empfangen eines Ausgangssignals. Die vorliegende Erfindung bezieht sich ferner auf eine hochparallele Signalverarbeitung in Filtern zur Vorwärts-Fehlerkorrektur (Forward Error Correction - FEC), Filtern mit unendlicher Impulsantwort (Infinite Impulse Response - IIR), insbesondere Tomlinson-Harashima-Vorverzerrungsfilter (Tomlinson-Harashima Precoding-THP) und Filtern mit endlicher Impulsantwort (Finite Impulse Response - FIR) für Multi-Gigabit-Datenübertragung.

Für eine serielle Basisband-Datenübertragung mit hohem Durchsatz (im Multi-Gigabit-Bereich) ist es auch bei Verwendung eines höherwertigen Modulationsverfahrens notwendig Dämpfung im Kanal zu kompensieren. Die Kompensations-Filter werden aufgrund der höheren Linearitätsanforderung (im Vergleich zu binärer Modulation) digital implementiert. Die Datenverarbeitung in digitalen Kompensations-Filtern wird für Systeme mit Multi-Gigabit-Durchsatz oft parallelisiert, da auch moderne CMOS-Prozesse (CMOS = Complementary Metal Oxide Semiconductor - Komplementärer Metalloxidhalbleiter) in den maximal möglichen Taktraten beschränkt sind.

Allgemein können zur Kompensation der Übertragungsfunktion FIR- und IIR-Filter verwendet werden. Eine spezielle Form des IIR-Filters ist ein Tomlinson-Harashima-Precoder, THP.

Zur Verbesserung der Bitfehlerrate wird üblicherweise eine Blockcodierung in Form einer Forward Error Correction (FEC) eingesetzt. Da bei solchen Verfahren eine Redundanz (Paritäts-Bits) zugehörig zu bestimmten Daten codiert wird, werden die Daten jeweils im gleichen Block decodiert. Dies macht ein zyklisches Einfügen einer bekannten Markierungs-Sequenz, ein sogenanntes Framing der Daten, und eine Synchronisierung der Frame-Starts für die Verarbeitung notwendig.

Solche hochbitratigen seriellen Links werden auch im Multiplex-Betrieb für verschiedene Datenströme genutzt. Z.B. werden verschiedene Busse, Protokolle und/oder Nutzer (U-ser) akkumuliert und wieder getrennt. Es können auch verschiedene Datenquellen, z.B. an den Netzwerkknoten, durch lokale Anbindung anderer Netzwerke und lokaler DatenSenken/-Quellen über den Link gesendet bzw. empfangen werden.

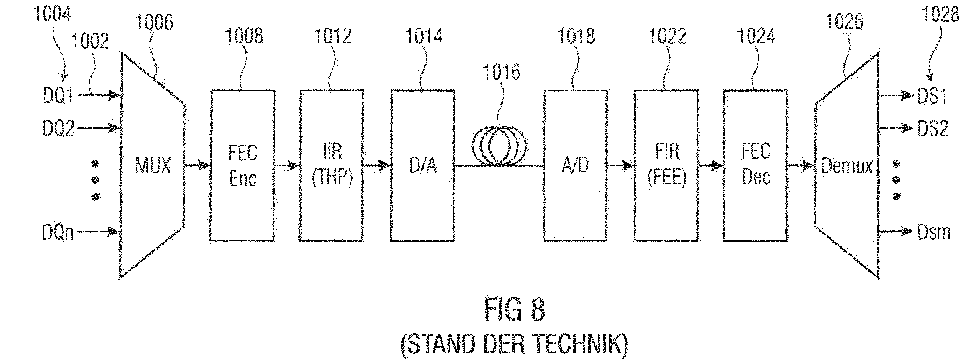

Ein bekannter Lösungsweg für die vorliegende Problemstellung ist in Fig. 8 dargestellt. Daten 1002 aus unter Umständen verschiedenen Quellen 1004 (Datenquelle-DQ1, DQ2, ..., DQn) werden mit einem Multiplexer 1006 in einen seriellen Datenstrom kombiniert. Der Multiplexer kann dabei verschieden große Blöcke aus verschiedenen Quellen in eine beliebige Reihenfolge bringen. Dieser serielle Datenstrom durchläuft danach die Signalverarbeitung auf der Senderseite umfassend eine FEC 1008 und ein Vorverzerrung mittels eines THP-Filters 1012. Der Datenstrom wird anschließend übertragen, d.h. es erfolgt eine Digital/Analog (D/A)-Wandlung 1014, eine Übertragung über ein Medium 1016, eine Analog/Digital (A/D)-Wandlung 1018 sowie eine optionale Verstärkung des analogen oder digitalen Signals. Das Signal durchläuft auf der Empfängerseite in der gleichen bzw. äquivalenten Sequenz die dortige Signalverarbeitung. Dies umfasst eine Kanalentzerrung (Feed Forward Equalizer - FFE) mittels eines FIR-Filters 1022 und eine FEC 1024 auf der Decoderseite (Dec). Danach werden die Daten durch einen Demultiplexer 1026 wieder aufgeteilt und an verschiedene Datensenken 1028 (DS1, DS2, ... DSn) weitergegeben.

Zur Erhöhung von Durchsatzraten ist eine kontinuierliche Parallelisierung von THP-Filtern unter Abnahme der Effektivität bei zunehmender Parallelisierung bekannt. Eine THP/IIR-Filterstruktur kann derart transformiert werden, dass Rückkopplungspfade der IIR-Filter ohne bzw. mit geringer Laufzeit (Delay) eliminiert werden. Durch die längeren Rückkopplungspfade können bekannte Pipelining-Strategien angewendet werden, die eine moderate Erhöhung der erreichbaren Taktraten für IIR/THP-Filter ermöglichen. Diese Methoden bleiben durch die erreichbaren Taktraten in CMOS-Prozessen beschränkt. Für FIR-Filter sind zur Erhöhung von Taktraten die Methoden
Overlap-Save und Overlap-Add bekannt.

Die Aufgabe der vorliegenden Erfindung besteht darin, ein Konzept zu schaffen, dass es ermöglicht, einen Datendurchsatz der Signalverarbeitungsfilter und/oder des Übertragungskanals zu erhöhen und/oder eine Verlustleistung der Signalverarbeitungsfilter gering zu halten.

Diese Aufgabe wird durch den Gegenstand der unabhängigen Patentansprüche gelöst.

Ein Kerngedanke der vorliegenden Erfindung besteht darin, erkannt zu haben, dass obige Aufgabe dadurch gelöst werden kann, dass eine Signalverarbeitung unterschiedlicher Datensignale bereits vor einem Multiplexen derselben erfolgen kann und dass durch Kombinieren der Datensignale mit einem Referenzsignal eine gleichbare oder vergleichbare Systemantwort der IIR-Filter bezogen auf das Referenzsignal und bezogen auf andere gefilterte Datenströme erhalten werden kann. Die gleichen oder vergleichbaren Systemantworten ermöglichen ein Aneinanderfügen der unterschiedlichen gefilterten Datenströme durch den Multiplexer, so dass der durch den Multiplexer erhaltene Datenstrom so wirkt (monolithisch), als wäre er durch einen monolithischen, d. h. einzelnen Filter gefiltert worden. Dies ermöglicht einen hohen Netto-Datendurchsatz durch den Kanal, da der Datenstrom kontinuierlich demoduliert bzw. decodiert werden kann. Eine Einschwingzeit der Entzerrfilter kann so reduziert und/oder ein Datendurchsatz erhöht werden. Ferner kann eine Kanalcodierung parallelisiert erfolgen, was bei gleichbleibender Filterkomplexität zu erhöhtem Datendurchsatz durch die erhöhte Anzahl von Filtern führt. Ferner kann eine Verlustleistung der Filter dadurch reduziert werden, dass die Filter bereits auf eine zu erhaltende Systemantwort, die das jeweilige Filter auf das Referenzsignal hin liefert, voreingestellt werden, so dass eine Beaufschlagung des Filters mit dem Referenzsignal selbst teilweise entfallen kann, was zu einer reduzierten Verlustleistung des Filters führt.

Gemäß einem Ausführungsbeispiel umfasst eine Sendeeinrichtung eine erste Filterstruktur mit einem ersten Kombinierer, der ausgebildet ist, um ein erstes Datensignal um ein erstes Referenzsignal zu erweitern, um ein erstes erweitertes Datensignal zu erhalten. Die erste Filterstruktur umfasst ein erstes IIR-Filter zum Filtern des ersten erweiterten Datensignals, um ein erstes gefiltertes Datensignal zu erhalten. Die Sendeeinrichtung umfasst eine zweite Filterstruktur mit einem zweiten Kombinierer, der ausgebildet ist, um ein zweites Datensignal um ein zweites Referenzsignal zu erweitern, um ein zweites erweitertes Datensignal zu erhalten. Die zweite Filterstruktur umfasst ein zweites IIR-Filter zum Filtern des zweiten erweiterten Datensignals, um ein zweites gefiltertes Datensignal zu erhalten. Diese Sendeeinrichtung umfasst einen Multiplexer zum Kombinieren des ersten und des zweiten gefilterten Datensignals, um das Ausgangssignal basierend auf den gefilterten Datensignalen zu erhalten. Eine Systemantwort des ersten IIR-Filters basierend auf dem ersten Referenzsignal entspricht einer Systemantwort des zweiten IIR-Filters basierend auf dem zweiten Referenzsignal. Das erste und zweite Datensignal können unabhängig voneinander eine Signalverarbeitungskette durchlaufen, so dass die Filter parallelisierbar sind und einen hohen Durchsatz erzeugen können. Ferner sind die gefilterten Datensignale basierend auf den gleichen oder vergleichbaren Systemantworten der Filter auf die Referenzsignale hin in dem Multiplexer ohne Trainingssymbole kombinierbar, die erforderlich wären, um Empfangsfilter in einen eingeschwungenen Zustand zu versetzen.

Gemäß einem weiteren Ausführungsbeispiel umfasst eine Empfangseinrichtung zum Empfangen eines Ausgangssignals einen Demultiplexer zum Erzeugen eines ersten und eines zweiten Empfangssignals aus dem empfangenen Ausgangssignal. Die Empfangseinrichtung umfasst ferner eine erste Empfangs-Struktur mit einem ersten Entzerrfilter zum Entzerren des ersten Empfangssignals und mit einem ersten Separator, der ausgebildet ist, um ein erstes Referenzsignal von dem entzerrten ersten Empfangssignal zu separieren. Die Empfangseinrichtung umfasst ferner eine zweite Empfangs-Struktur mit einem zweiten Entzerrfilter zum Entzerren des zweiten Empfangssignals und mit einem zweiten Separator, der ausgebildet ist, um ein zweites Referenzsignal von dem entzerrten zweiten Empfangssignal zu separieren. Eine derartige Empfangseinrichtung ermöglicht eine parallelisierte Entzerrung von Datenströmen, so dass ein Durchsatz der Gesamtheit von Filtern gegenüber bekannten Konzepten erhöht ist.

Weitere Ausführungsbeispiele beziehen sich auf ein Übertragungssystem mit einer Sendeeinrichtung und einer Empfangseinrichtung, auf ein Verfahren zum Senden eines Ausgangssignals und zum Empfangen eines Ausgangssignals sowie auf ein Computerprogramm.

Weitere vorteilhafte Ausführungsformen sind der Gegenstand der abhängigen Patentansprüche.

Bevorzugte Ausführungsbeispiele der vorliegenden Erfindung werden nachfolgend Bezug nehmend auf die beiliegenden Zeichnungen erläutert. Es zeigen:
- Fig. 1a: eine schematisches Blockschaltbild einer Sendeeinrichtung zum Senden eines Ausgangssignals gemäß einem Ausführungsbeispiel;
- Fig. 1b: eine schematische Gegenüberstellung der erweiterten Datensignale, der gefilterten Datensignale und des Ausgangssignals gemäß einem Ausführungsbeispiel;
- Fig. 2: ein schematisches Blockschaltbild einer Sendeeinrichtung, bei der Filterstrukturen gegenüber Filterstrukturen der Sendeeinrichtung aus Fig. 1 eine Berechnungseinrichtung aufweisen, gemäß einem Ausführungsbeispiel;
- Fig. 3: ein schematisches Blockschaltbild eines rückgekoppelten Filters, der beispielsweise als IIR-Filter in der Sendeeinrichtung aus Fig. 1 oder 2 angeordnet sein kann gemäß einem Ausführungsbeispiel;
- Fig. 4: ein schematisches Blockschaltbild einer Empfangseinrichtung zum Empfangen eines von einer Sendeeinrichtung gesendeten Ausgangssignals gemäß einem Ausführungsbeispiel;
- Fig. 5: ein schematisches Blockschaltbild einer Empfangseinrichtung, die gegenüber Empfangs-Strukturen der Empfangseinrichtung aus Fig. 4 modifizierten Empfangs-Strukturen aufweist gemäß einem weiteren Ausführungsbeispiel;
- Fig. 6: ein schematisches Blockschaltbild eines Übertragungssystems, das die Sendeeinrichtung aus Fig. 2 und die Empfangseinrichtung aus Fig. 4 umfasst gemäß einem Ausführungsbeispiel;
- Fig. 7: ein schematisches Blockschaltbild eines alternativen Übertragungssystems, bei dem die Sendeeinrichtung Modulatoren zum Modulieren der Datensignale und die Empfangseinrichtung Demodulatoren sowie Einrichtungen zur Synchronisation umfassen; und
- Fig. 8: ein Übertragungssystem gemäß dem Stand der Technik.

Bevor nachfolgend Ausführungsbeispiele der vorliegenden Erfindung im Detail anhand der Zeichnungen näher erläutert werden, wird darauf hingewiesen, dass identische, funktionsgleiche oder gleichwirkende Elemente, Objekte und/oder Strukturen in den unterschiedlichen Figuren mit den gleichen Bezugszeichen versehen sind, so dass die in unterschiedlichen Ausführungsbeispielen dargestellte Beschreibung dieser Elemente untereinander austauschbar ist bzw. aufeinander angewendet werden kann.

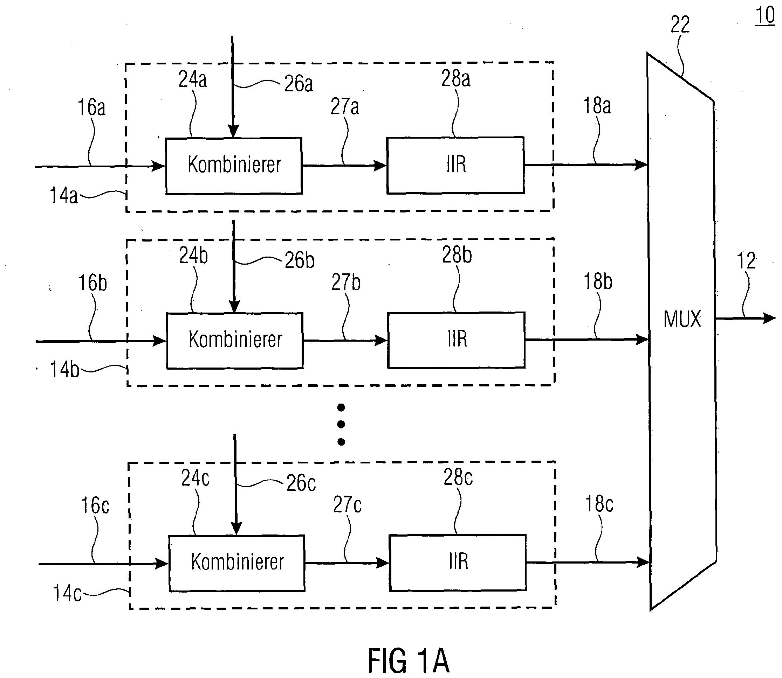

Fig. 1a zeigt eine schematisches Blockschaltbild einer Sendeeinrichtung 10, bspw. ein Kanalcodierer, zum Senden eines Ausgangssignals 12 über ein Übertragungsmedium, etwa eine Draht- oder Glasfaserverbindung oder ein Funkmedium. Die Sendeeinrichtung 10 umfasst eine Mehrzahl von Filterstrukturen 14a-c, die ausgebildet sind, um jeweils ein Datensignal 16a-c zu empfangen und um ein gefiltertes Datensignal 18a-c bereitzustellen. Bei den Datensignalen 16a-c kann es sich um zu übertragende Datenströme unterschiedlicher Datenquellen handeln. Bei den Datenquellen kann es sich um jedwede Art von Datenquelle handeln, beispielsweise einem Netzwerkknoten, einem Server, einem PC, einer Festplatte, einer Videokamera, einem Sensor oder anderen Vorrichtungen, die zu übertragende Daten bereitstellen oder generieren. Die Datensignale können von einem Blockcodierer empfangen werden, etwa von einem FEC-Codierer, der ausgebildet ist, um Quelldaten der Datenquelle blockweise mit Redundanz (Fehlererkennungs- und - korrekturinformation) zu erweitern.

Die Sendeeinrichtung 10 umfasst einen durch "MUX" gekennzeichneten Multiplexer 22, der ausgebildet ist, um die gefilterten Datensignale 18a-c zu multiplexen, d.h. sequenziell bzw. seriell aneinanderzufügen, um das Ausgangssignal 12 zu erhalten. Der Multiplexer 22 ist ferner ausgebildet, um das Ausgangssignal 12 auszugeben. Eine Größe und eine Reihenfolge bzw. Position von Subsequenzen aus den gefilterten Datensignalen 18a-c oder Teilen davon in dem Ausgangssignal 12 kann dabei jeweils konfigurierbar und dynamisch einstellbar sein, etwa basierend auf voneinander verschiedenen Bitraten der Datensignale 16a-c.

Jeder der Filterstrukturen 14a-c weist einen Kombinierer 24a, 24b bzw. 24c auf, der ausgebildet ist, um das Datensignal 16a, 16b bzw. 16c zu empfangen und um das jeweilige Datensignal 16a-c mit einem Referenzsignal 26a, 26b bzw. 26c zu kombinieren, um ein erweitertes Datensignal 27a, 27b bzw. 27c zu erhalten. Bei dem Referenzsignal kann es sich um eine systemweit (d.h. senderseitig und empfängerseitig) bekannte Datensequenz handeln, die an einer bestimmten bzw. vordefinierten Stelle des jeweiligen Datensignals 16a-c eingefügt wird. Beispielsweise wird das Referenzsignal 26a-c zwischen zwei Datenblöcke des jeweiligen Datensignals 16a-c eingefügt. Eine Datenlänge der Referenzsignale 26a-c kann von einer in einem Empfänger des Ausgangssignals 12 ermöglichten Funktion beeinflusst sein, wie später ausgeführt wird und ermöglicht den Erhalt einer vergleichbaren Systemantwort in verschiedenen IIR-Filtern der Sendeeinrichtung.

Ein Referenzsignal 26a-c ist beispielsweise mit einem Datensignal 16a-c derart kombinierbar, dass das Referenzsignal 26a-c ganz oder teilweise an einer oder mehreren vorbestimmten Stellen, etwa an einem Anfang, an einem Ende oder an definierter Position zwischen dem Anfang und dem Ende eines Datenblocks des jeweiligen Datensignals 16a-c hinzugefügt wird. Wird das Referenzsignal 26a-c am Anfang und/oder am Ende eines Datenblocks des jeweiligen Datensignals 16a-c (d. h., zwischen zwei Datenblöcke) eingefügt, so ist das jeweilige IIR-Filter 28a-c während einer Filterung des am Anfang eingefügten Referenzsignals noch nicht hinreichend von den Daten des am Anfang eingefügten Referenzsignals 26a-c beeinflusst (trainiert). Dies kann zu bspw. nicht monolithisch wirkenden (d. h. in der Umgebung der Übergangsstellen zwischen den Filtern 28a-c ein merkliches Fehlersignal enthaltenden) Daten vor dem gefilterten Datensignal führen, da das IIR-Filter 28a-c nicht eingeschwungen ist. Am Ende des Datenblocks wirkt das gefilterte Datensignal 18a-c basierend auf dem erhaltenen eingeschwungenen Zustand monolithisch. Vor dem Multiplexen können die nicht monolithisch wirkenden Daten als ungültig betrachtet und/oder aus dem Datenstrom entfernt werden. Die Entfernung der ungültigen Daten kann bspw. in dem jeweiligen IIR-Filter 26a-c, in dem Multiplexer 22 oder mittels einer Berechnungseinrichtung, die die gefilterten Datensignale 18a-c beeinflusst, erfolgen.

Die Referenzsignale 26a-c können zeitinvariant oder über verschiedene Zeitintervalle veränderlich sein. Bspw. können die Referenzsignale basierend auf einer veränderlichen Signalleistung des jeweiligen Datensignals 16a-c eine ebenfalls veränderliche und an die Signalleistung des Datensignals 16a-c angepasste, d. h., in etwa gleiche, Signalleistung aufweisen. Die Referenzsignale 26a-c können zueinander gleich sein, oder voneinander verschiedene Informationen (Bits oder Symbole und/oder gleiche oder verschiedene Datenlängen) aufweisen

Jede der Filterstrukturen 14a-c umfasst ein IIR-Filter 28a, 28b bzw. 28c, das ausgebildet ist, um das jeweilige erweiterte Datensignal 27a, 27b oder 27c zu filtern. Die IIR-Filter 28a-c sind beispielsweise als Vorverzerrungsfilter ausgestaltet, die ausgebildet sind, um eine erwartete Verzerrung des Ausgangssignal 12 in dem Übertragungsmedium vorab zu kompensieren. Die IIR-Filter 28a-c können eine beliebige IIR-Filterstruktur aufweisen, u.a. auch eine Tomlinson-Harashima-Filterstruktur (THP-Filter).

Eine statistische Verzerrung der gefilterten Datensignale 18a, 18b und 18c in dem Ausgangssignal 12 kann als gleich angenommen werden, da alle Signale in kurzen Zeitabständen über den gleichen Kanal übertragen werden. Entsprechend kann eine Vorverzerrungscharakteristik der IIR-Filter 28a-c gleich oder vergleichbar sein. Gemäß einem Ausführungsbeispiel sind die IIR-Filter 28a-c als THP-Filter ausgebildet.

Die IIR-Filter 28a-c sind ausgebildet, um das jeweilige erweiterte Datensignal 27a-c und mithin zeitweise ganz oder teilweise das jeweilige Referenzsignal 26a-c und zu anderen Zeiten ganz oder teilweise das Datensignal 16a-c zu filtern. Eine Systemantwort des IIR-Filters 28a basierend auf einer Filterung des Referenzsignals 26a ist zumindest zu einem Ende des Filtervorgangs vergleichbar mit einer entsprechenden Systemantwort des IIR-Filters 36b bzw. 36c basierend auf einer Filterung des Referenzsignals 26b bzw. 26c.

Filtert das IIR-Filter 28a das Referenzsignal 26a, so erzeugt das Referenzsignal 26a eine entsprechende Systemantwort in dem Filter 28a. Entsprechendes gilt für das IIR-Filter 28b bezüglich des Referenzsignals 26b und das IIR-Filter 28c bezüglich des Referenzsignals 26c. Weisen die IIR-Filter 28a-c eine gleiche Filterlänge und gleiche Filterkoeffizienten auf, so können die Referenzsignale 26a-c gleich sein, das bedeutet es kann sich bei den Referenzsignalen 26a-c um dasselbe Signal handeln. Eine Systemantwort der IIR-Filter 28a-c, d.h. ein jeweiliges Teil-Ausgangssignal, ist mithin basierend auf dem oder den Referenzsignalen 26a-c gleich bzw. vergleichbar. Die Systemantworten der IIR-Filter 28a-c basierend auf den Referenzsignalen 26a-c können gleich oder in etwa gleich sein. Weisen die IIR-Filter 28a-c einen gleichen Ausgangszustand, eine gleiche Filterstruktur und gleiche Filterkoeffizienten auf und werden die IIR-Filter 28a-c mit gleichen Referenzsignalen 26a-c beaufschlagt, so stellt sich auch ein gleicher eingeschwungener Zustand der IIR-Filter ein. Weisen die IIR-Filter 28a-c jedoch voneinander verschiedene Ausgangszustände auf, etwa basierend auf voneinander verschiedenen Datensignalen 16a-c, die vorangehend gefiltert wurden, so wirken Ausgangszustände basierend auf der rückgekoppelten Struktur der Filter 28a-c auch auf zukünftige Systemzustände ein. Die Referenzsignale 26a-c weisen eine Länge auf, die derartige Effekte so weit reduziert, dass diese Effekte vernachlässigbar und die Systemantworten vergleichbar sind.

Nach dem Multiplexen wirkt das Ausgangssignal 12 hierdurch so, als wäre es durch lediglich ein Filter gefiltert, d.h. gerechnet worden. Dies ermöglicht eine effiziente Entzerrung und Decodierung auf Empfängerseite.

Dies kann dadurch erreicht werden, dass die Länge des Referenzsignals 26a-c zumindest doppelt so lang (Faktor 2), zumindest drei Mal so lang (Faktor 3), zumindest fünf Mal so lang (Faktor 5) oder höher ist, wie eine Filterlänge der IIR-Filter 28a-c.

An Bereichen der gefilterten Datensignale 18a-c, die eine untereinander vergleichbare Systemantwort aufweisen, können die einzelnen Datenströme mittels des Multiplexers 22 aneinandergefügt werden und dabei eine Struktur beibehalten, die einer Struktur entspricht, die durch eine Filterung eines Datenstroms durch einen Filter erhalten worden wäre, so dass empfängerseitig eine reduzierte oder keine Einschwingzeit für Empfangsfilter erforderlich ist.

Die Sendeeinrichtung 10 kann eine beliebige Anzahl von Filterstrukturen 14a-c aufweisen, beispielsweise 2, 3 oder mehr.

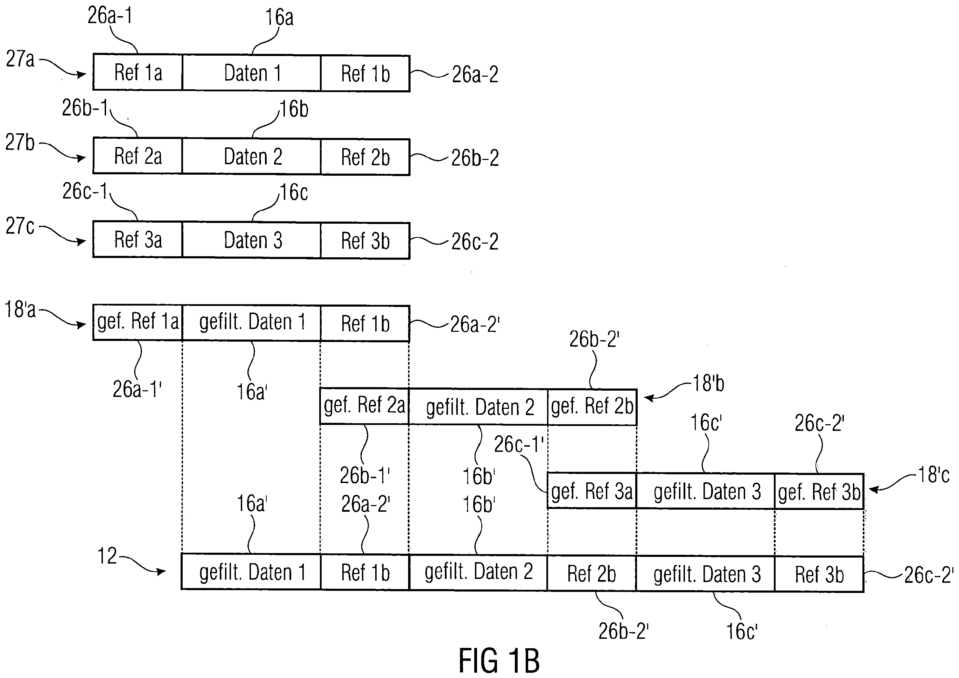

Fig.1b zeigt eine schematische Gegenüberstellung der erweiterten Datensignale 27a, 27b und 27c. Die erweiterten Datensignale 27a-c weisen je einen Datenblock der Datensignale 16a, 16b bzw. 16c (Daten 1, Daten2, Daten3) auf, die mit den Referenzsignalen 26a-c so kombiniert sind, dass jeweils vor dem Datenblock das Referenzsignal 26a-1, 26b-1 bzw. 26c-1 und nach dem Datenblock das Referenzsignal 26a-2, 26b-2 bzw. 26c-2 angefügt ist. Die Referenzsignale weisen beispielhaft gleiche Datenlängen auf, können, wie oben ausgeführt, jedoch auch voneinander verschieden sein. Alternativ oder zusätzlich können auch Datenlängen der Datensignale 16a-c gleich oder voneinander verschieden sein. Basierend auf den erweiterten Datensignalen 27a-c werden mittels Filterung der Filter 28a-c gefilterte Datensignale 18'a-c erhalten. Die gefilterten Datensignale 18'a-c unterscheiden sich von den gefilterten Datensignalen 18a-c aus Fig. 1a dadurch, dass die gefilterten Datensignale 18'a-c (noch) die ungültigen Präambeln 26a-1', 26b-1' und 26c-1'aufweisen.

Die gefilterten Datensignale 18'a-c weisen eine gleiche Datenstruktur (Referenzsignal - Datensignal - Referenzsignal) auf, wie die erweiterten Datensignale 27a-c, wobei die Referenzsignale und die Datensignale gefiltert sind, wie es durch die Ergänzung gefilt. bzw. gef. mit der Bedeutung "gefiltert" angedeutet ist. Das gefilterte Datensignal weist das gefilterte Referenzsignal 26a-1' vor und das gefilterte Referenzsignal 26a-2' nach dem gefilterten Signal 16a' auf. Die gefilterten Datensignale 18'b und 18'c weisen eine gleiche Struktur auf. Die gefilterten Datensignale 18'a-c werden mittels des Multiplexers 22 zu dem Ausgangssignal 12 kombiniert.

Das erhaltene Ausgangssignal 12 weist eine (monolithische) Struktur auf, d. h., es wirkt so, als wäre es durch einen einzelnen IIR-Filter gefiltert worden. Hierbei ist das zu einem Zeitpunkt erhaltene Ausgangssignal 12 abhängig von vorangegangenen Filteroperationen der Filter, die den jeweiligen Datenabschnitt filtern. Die jeweils vorangestellten gefilterten Referenzsignale 26a-1' 26b-1' und 26c-1' sind jedoch von dem jeweils im Ausgangssignal 12 vorangehenden Datensequenzen der anderen erweiterten oder gefilterten Datensignale unbeeinflusst. Das bedeutet, das gefilterte Referenzsignal 26a-1' kann ungleich sein, wie das gefilterte Referenzsignal 26b-1' und/oder 26c-1'. Die gefilterten Signale 16a'-c' sind mittels der Referenzsignale 26a-1, 26b-1 und 26c-1 von Filtern in einem eingeschwungenen Zustand gefiltert und von diesen vorangehenden Signalen hinreichend beeinflusst. Ebenso sind die angehängten Referenzsignale 26a-2', 26b-2' und 26c-2' von den jeweiligen Datensignalen 16a-c hinreichend beeinflusst. So wird bspw. erreicht, dass ein vor (und nach) jedem Datenblock 16a-c eingefügtes Referenzsignal 26a-c (Präambel) am Ende des jeweiligen gefilterten Datenblocks 16a'-c' übertragen wird, da die Präambel zu Beginn des Datenblocks als ungültig erachtet bzw. entfernt und am Ende des Datenblocks korrekt gefiltert und übertragen wird.

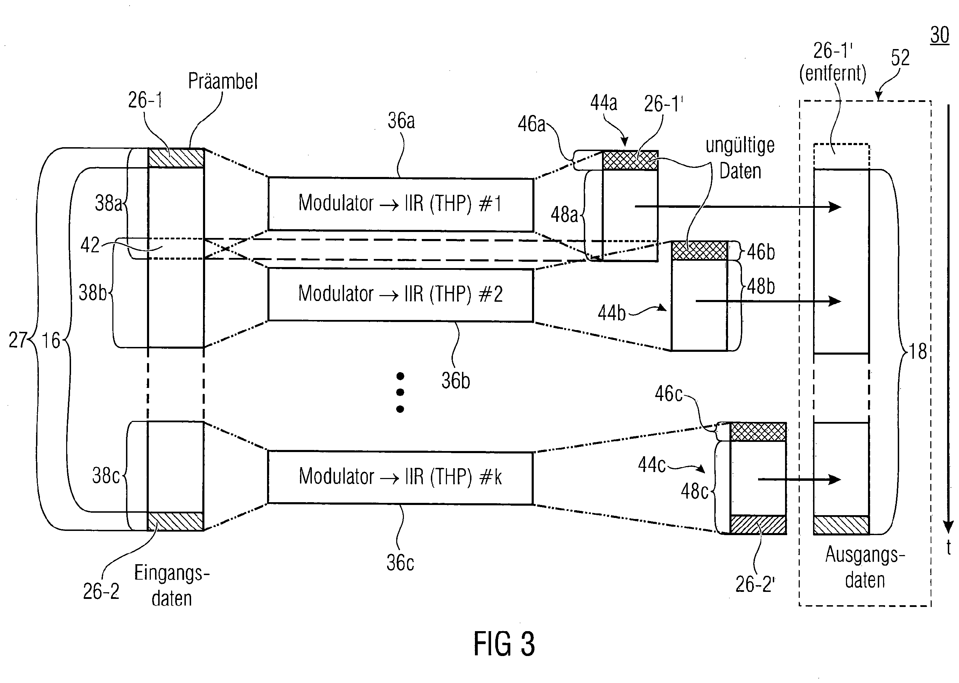

Die monolithische Struktur des Ausgangssignals 12 kann erhalten werden, indem der Multiplexer 22, das jeweilige IIR-Filter 28a-c oder eine zwischen die Filter 28a-c und den Multiplexer 22 geschaltete Einrichtung (etwa ein Signalformer) ausgebildet ist, um die jeweils ungültigen bzw. nicht hinreichend beeinflussten Filterantworten 26a-1', 26b-1' und 26c-1' zu entfernen und das Ausgangssignal 12 basierend auf den sequentiell aneinanderfügten gefilterten Signalen 16a'-c' und 26a-2', 26b-2' bzw. 26c-2' zu erzeugen. Das bedeutet, dass die gefilterten Datensignale die jeweils ungültige Präambel 26a-1', 26b-1' und 26c-2', alternativ zu der in Fig. 1b dargestellten Situation auch nicht aufweisen können, etwa wenn das IIR-Filter ausgebildet ist, um die Daten zu entfernen oder wenn das IIR Filter einen Signalformer umfasst, der hierzu ausgebildet ist, wie es bspw. im Zusammenhang mit Fig. 3 beschrieben ist. Vereinfacht ausgedrückt, wird die Präambel gemäß dem Ausführungsbeispiel zweimal gerechnet (gefiltert), jedoch nur einmal übertragen. Hierfür wird ein Datenblock der Datensignale 16a-c um zwei Referenzsignalen erweitert, wovon eines (das dem Datensignal 16a-c vorangestellte) zum Trainieren der Filter genutzt, die erhaltene Filterantwort jedoch verworfen wird, um einen geringen Overhead (Anteil der Statusinformationen bzw. Linkverwaltungsinformationen) zu erhalten. Das dem Datensignal 16a-c angehängte Referenzsignal 26a-2, 26b-2 bzw. 26c-2 wird in seiner gefilterten Form 26a-1', 26b-1' bzw. 26c-1' übertragen. Die Filterantworten (gefilterten Referenzsignale) 26a-1', 26b-1' bzw. 26c-1' können gleich oder vergleichbar (d. h. vernachlässigbare Unterschiede, ggf. unterhalb des Systemrauschens) sein.

Es gehört dabei zu den vorteilhaften Eigenschaften der vorliegenden Erfindung, dass die Kombinationen (oder Tupel) (16a',26a-2'), (16b',26b-2') und (16c',26c-2') in jeder beliebigen Reihenfolge übertragen werden können und die entstehenden Wellenform immer monolithisch erscheint, d.h. keine Fehler an bzw. in der Umgebung der Übergänge zwischen den Tupeln aufweist.

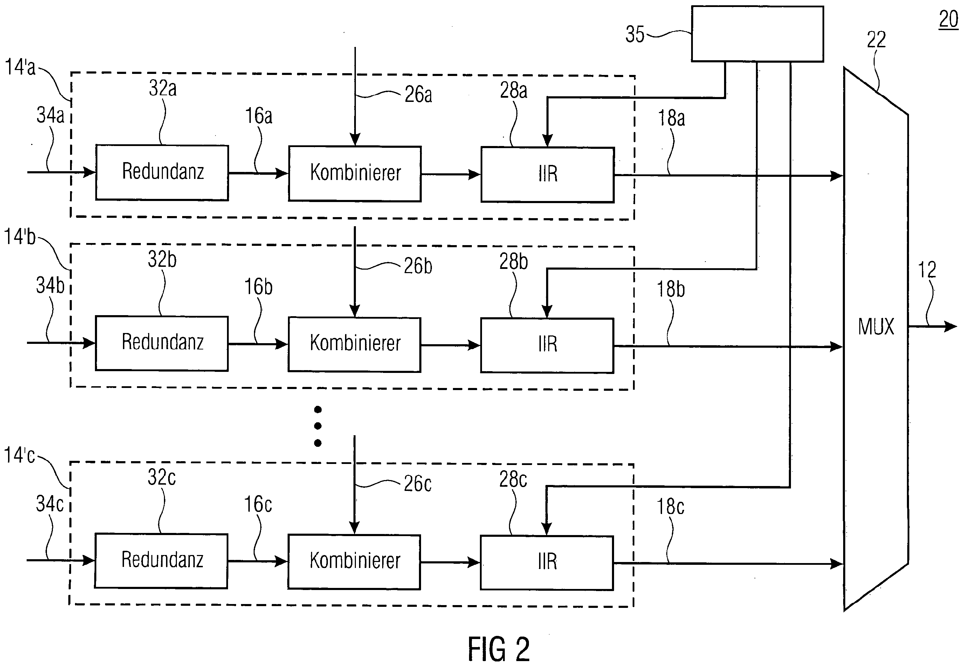

Fig. 2 zeigt ein schematisches Blockschaltbild einer Sendeeinrichtung 20, bei der Filterstrukturen 14'a-c gegenüber den Filterstrukturen 14a-c aus Fig. 1 eine Berechnungseinrichtung 32a, 32b bzw. 32c umfassen, die ausgebildet sind, um ein Quellensignal 34a, 34b oder 34c von einer Datenquelle zu empfangen und um eine Redundanzinformation bezüglich des jeweiligen Quellensignals 34a-c zu berechnen. Bei der Berechnungseinrichtung 32a-c kann es sich beispielsweise um eine Einrichtung zur Berechnung von Redundanz-Symbolen oder Redundanz-Bits oder einer anderen Vorcodierung handeln, die eine Fehlerkorrektur auf Empfängerseite ermöglicht. Beispielsweise können die Berechnungseinrichtungen 32a-c ausgebildet sein, um einen Algorithmus zur Vorwärtsfehlerkorrektur (Forward Error Correction - FEC) auszuführen. Entsprechend berechnete Symbole oder Bits können mit dem Quellensignal 34a, 34b oder 34c durch die Berechnungseinrichtung 32a-c kombiniert werden, um das jeweilige Datensignal 16a, 16b oder 16c zu erhalten. Die Berechnungseinrichtungen 32a-c können bspw. als Prozessor, feldprogrammierbares Gatterarray (FPGA), digitale Schaltung auf einem integrierten Schaltkreis oder dergleichen ausgeführt und ausgebildet sein, um die Quellensignale 34a, 34b oder 34c kontinuierlich oder diskontinuierlich zu empfangen. Die Berechnungseinrichtungen 32a-c können das jeweilige Quellensignal 34a-c bereits als zu verarbeitenden Block empfangen und kontinuierlich oder diskontinuierlich Daten empfangen, bis eine entsprechende Blockgröße erreicht ist und das Datensignal 16a, 16b bzw. 16c basierend auf einem verarbeitenden Block bereitstellen.

Das Kombinieren kann beispielsweise durch Anfügen oder Einfügen der Redundanzinformation (Symbole oder Bits) an oder in das Quellensignal 34a-c erfolgen. Eine Kombination der Quellensignale 34a-c durch Redundanzinformation ermöglicht eine erhöhte Übertragungssicherheit in einem Übertragungssystem, da Bitfehler korrigierbar sind.

Die Sendeeinrichtung 20 umfasst ferner eine Berechnungseinrichtung 35, etwa ein Prozessor oder dergleichen, die ausgebildet ist, um die IIR-Filter 28a-c einzustellen, d. h., um Filterkoeffizienten der IIR-Filter 28a-c zu berechnen und/oder zu justieren. Ferner kann die Berechnungseinrichtung 35 ausgebildet sein, um ein an das jeweilige Filter 28a-c anzulegende Signal zu beeinflussen, d.h. Signalabschnitte hinzuzufügen und/oder zu entfernen bzw. zu unterdrücken. Bspw. kann die Berechnungseinrichtung 35 ausgebildet sein, um als ungültig erachtete Daten der gefilterten Datensignale 18a-c zu entfernen. Die Berechnungseinrichtung 35 kann ferner ausgebildet sein, um eine System- oder Impulsantwort der IIR-Filter 28a-c zu berechnen, etwa auf ein Anlegen der Referenzsignal 26a-c an die IIR-Filter 28a-c hin. Alternativ kann die System- oder Impulsantwort empfängerseitig errechnet werden, etwa indem eine kombinierte Filter-Impulsantwort, bspw. nach einer erfolgten Fehlerkorrektur, sowie basierend auf einer Filterung des erhaltenen fehlerkorrigierten Signals berechnet wird. Die Berechnungseinrichtung 35 kann ausgebildet sein, um entsprechend erhaltene und übermittelte Filterkoeffizienten zu speichern und ggf. zeitvariant zu aktualisieren und um basierend auf den Koeffizienten die IIR-Filter 28a-c einzustellen. Digitale Filter mit einer bekannten Struktur sind durch ihre Koeffizienten hinreichend definiert. Sind die Koeffizienten bekannt, so kann auch die Impulsantwort als bekannt erachtet werden.

Die Referenzsignale 26a-c können zur weiteren Erhöhung der Übertragungssicherheit an das jeweilige Quellensignal 34a-c oder Datensignal 16a-c angepasst sein. So können die Referenzsignale 26a-c einen Modulationsgrad aufweisen, der geringer ist, als ein Modulationsgrad der Quellensignale 34a-c oder Datensignale 16a-c. Beispielsweise kann das Quellensignal 34a und/oder das Datensignal 16a mittels einer Puls-AmplitudenModulation (PAM) bzw. mittels einer Puls-Code-Modulation (PCM) moduliert sein und eine erste Anzahl möglicher Amplitudenlevel, etwa 3, 4, 5 oder mehr aufweisen. Das Referenzsignal 26a-c kann ebenfalls eine PAM bzw. PCM-Modulation und eine zweite Anzahl von möglichen Amplitudenlevel, etwa 2, 3, 4 oder mehr aufweisen, wobei die zweite Anzahl von möglichen Amplitudenlevel geringer ist als die erste Anzahl von Amplitudenlevel. Der geringere Modulationsgrad des Referenzsignals 26a verglichen mit dem Datensignal 16a bzw. dem Quellensignal 34a ermöglicht eine Erhöhung der Störsicherheit im Hinblick auf Übertragungsfehler für die Signalabschnitte der Referenzsignale 26a-c in dem Ausgangssignal 12. Eine Signalleistung der Präambel, d.h. des Referenzsignals, kann in einem Toleranzbereich von höchstens plus/minus 20 %, alternativ höchstens plus/minus 10 % oder alternativ höchstens plus/minus 5 % gleich sein, wie eine (mittlere) Signalleistung des jeweiligen Datensignals 16a, 16b oder 16c. Ferner können die Referenzsignale 26a-c mittelwertfrei ausgeführt sein, um das Ausgangssignal 12 ebenfalls mittelwertfrei zu halten, wenn das Datensignal 16 mittelwertfrei ist. Alternativ kann das Referenzsignal 26a-c mittelwertbehaftet sein, um einen Mittelwert des Datensignals 16a-c zu kompensieren bzw., um das gefilterte Datensignal 18a-c mit einem reduzierten Betrag eines Mittelwertes desselben zu erhalten. Alternativ kann das Referenzsignal 18a-c einen oder keinen Mittelwert unabhängig von einem oder keinem Mittelwert des Datensignals 16a-c aufweisen. Eine mittelwertfreie Konfiguration der Referenzsignale 26a-c ermöglicht eine verbesserte Verarbeitbarkeit des resultierenden Ausgangssignals 12 in analogen Frontends, d.h. Baugruppen, wie etwa Digital-Analog-Wandler (Digital-Analog Converter-DAC) und/oder Analog-Digital-Wandler (Analog-Digital-Converter - ADC). Dies kann ein wichtiges Auslegungskriterium sein.

Die Referenzsignale 26a-c können auch als Präambel bezeichnet werden, insbesondere wenn sie einem Block des Datensignals 16a, 16b bzw. 16c vorangestellt oder angehängt werden. Angehängte Referenzsignale 16a-c wirken auf einen nachfolgenden Block des Datensignals 16a-c gleich oder vergleichbar, wie ein vorangestelltes Signal. Die Präambel kann als Begrenzungsmarkierung der jeweiligen Datenblöcke (Frames) im kontinuierlichen Datenstrom (Ausgangssignal 12) genutzt werden. Dies ermöglicht die Nutzung der Markierung im Empfänger zur Synchronisierung dieser Frames, etwa auf parallelisierte Datenverarbeitungsketten. Die systemweit bekannte Präambel ermöglicht die unabhängige Verarbeitung der Eingangsdaten, die danach nahtlos in der seriellen Übertragung aneinanderpassen, d.h. so erscheinen, als wären sie in einer einzigen seriellen Kette verarbeitet worden. Ein Kommunikationslink zwischen Sender und Empfänger kann dadurch eine hohe Nutzdatenlast mit nur einer minimalen Last von "Verwaltungsdaten" übertragen, die sehr effizient genutzt werden können, etwa für eine Synchronisation und/oder ein Training der Parallelisierungen auf Sender- und Empfängerseite.

Eine Nutzdatenlast kann erhöht oder maximiert werden, wenn die Daten der verschiedenen Datenquellen in Vielfachen von FEC-Blockgrößen gesendet werden, d.h., die Nutzdatenlast eines FEC-Blocks voll ausgenutzt wird. Durch die Unabhängigkeit der parallelen Datenverarbeitung der Filterstrukturen 14a-c bzw. 14'a-c können unabhängige Datenquellen gehandhabt werden. Die Datenquellen können zeitlich unabhängig sein. Der eingehende Datenstrom einer Datenquelle (Quellensignal 34c-c) kann kontinuierlich, alternativ auch diskontinuierlich ausgebildet sein. Das Zusammensetzung eines kontinuierlichen Stroms kann nach der Signalverarbeitung bei der Serialisierung, d.h. mittels des Multiplexers 22 erfolgen. Im Gegensatz zum Stand der Technik, bei dem die Daten für die serielle Übertragung umorganisiert (gemultiplext) werden und dann die Signalverarbeitung durchlaufen, kann durch die vorangehenden Ausführungsbeispiele die Signalverarbeitung für die Übertragung auf einer Untermenge des Datenstroms und parallel zu anderen unabhängig arbeitenden Signalverarbeitungsketten erfolgen und das Umorganisieren der Daten für den seriellen Link nach der Verarbeitung in den Filterstrukturen 14a-c bzw. 14'a-c stattfinden. Trotz dieser Verschiebung der "Multiplex-Operation" nachfolgend zu der Signalverarbeitung erscheint die Sendesequenz (Ausgangssignal 12) auf dem Kanal als ein einzelnes kontinuierlich verarbeitetes Signal. Ausführungsbeispiele ermöglichen so die Ausnutzung eines maximalen Anteils an Nutzdaten.

Fig. 3 zeigt ein schematisches Blockschaltbild eines rückgekoppelten Filters 30, der beispielsweise als IIR-Filter 28a, 28b oder 28c in der Sendeeinrichtung 10 oder 20 angeordnet sein kann. Eine sequenzielle Folge der Signalabschnitte bzw. des erweiterten Datensignals 27 und des gefilterten Datensignals 18 ist durch die Zeitachse t dargestellt. Das erweiterte Datensignal 27 umfasst die Referenzsignale 26-1 und 26-2, die gemäß den Ausführungen der Fig. 1b dem Datensignal 16 voran- bzw. nachgestellt sind. Auf das Referenzsignal 26-2 (Präambel) kann ein weiterer Block des Datensignals 16 (mit dazugehörigem Referenzsignal) folgen. Das rückgekoppelte Filter 30 umfasst eine Mehrzahl, d.h. zwei, drei oder mehr IIR-Filter 36a-c, die ausgebildet sind, um je einen Signalabschnitt des erweiterten Datensignals 27 zu filtern, das bedeutet, dass das erweiterte Datensignal 27 durch eine parallelisierte Struktur von IIR-Filtern 36a-c gefiltert wird.

Die IIR-Filter 36a-c sind ausgebildet, um jeweils einen Signalabschnitt 38a, 38b bzw. 38c des erweiterten Datensignals 27 zu filtern und können als THP-Filter ausgeführt sein. Die Signalabschnitte 38a und 38b überlappen sich in einem Überlappungsbereich 42, das bedeutet, der Überlappungsbereich 42 des erweiterten Datensignals 27 wird sowohl durch das IIR-Filter 36a, am Ende des Signalabschnitts 38a, und von dem IIR-Filter 36b, am Anfang des Signalabschnitts 38b gefiltert. Zwischen jeweils zwei aufeinanderfolgenden Signalabschnitten 38a-c ist ein Überlappungsbereich 42 angeordnet.

Da die Systemantwort des jeweiligen IIR-Filters 36a-c von einem vorangegangenen Signalverlauf einer bestimmten Zeitdauer abhängig ist, bis die Rückkopplungen des vorausgegangenen Signalabschnitts zu einem vernachlässigbaren Anteil gedämpft sind, sind auch jeweils gefilterte Signalabschnitte 44a, 44b bzw. 44c der IIR-Filter 36a-c von vorangegangenen Signalbestandteilen abhängig. Dies kann dazu führen, dass die gefilterten Signalabschnitte 44a-c eine anfängliche Datensequenz 46a, 46b bzw. 46c aufweisen, die von einem Filter in einem nicht-eingeschwungenen Zustand (oder einem Zustand, der von einem nicht zu dem aktuell gefilterten Block des jeweiligen erweiterten Datensignals 27 gehörendem Datenblock beeinflusst ist) gefiltert wurde. Nicht-eingeschwungen bezieht sich auf einen theoretischen Zustand, der erhalten werden würde, wenn das erweiterte Datensignal 27 kontinuierlich von einem einzigen IIR-Filter gefiltert worden wäre. Basierend auf der Parallelisierung des einzelnen IIR-Filters in mehrere Teil-Filter 36a-c sind die Filter 36a-c von Signalverläufen des erweiterten Datensignals 27, die zeitlich vor dem jeweiligen Signalabschnitt 38a, 38b bzw. 38c angeordnet sind, unbeeinflusst und deshalb diesbezüglich zu Beginn der Signalabschnitte 38a-c und des gefilterten Signalabschnittes 44a-c in Bereichen 46a-c uneingeschwungen. In diesen uneingeschwungenen Zuständen ist die Systemantwort des Filters von einer Systemantwort, die von einem einzelnen Filter, der den gesamten Datenblock filtert, in einem relevanten Ausmaß verschieden, so dass diese Daten, wie etwa das gefilterte Referenzsignal 26-1', als "ungültig" betrachtet werden können. Der Signalformer 52 ist ausgebildet, um als ungültig erachtete Daten 46a-c und mithin auch die Filterantwort auf die Präambel 26-1 hin zu entfernen, so dass das gefilterte Datensignal 18 diese Filterantwort in dem gezeigten Zustand nicht umfasst.

Vereinfacht ausgedrückt, werden Daten des Überlappungsbereichs 42 durch das IIR-Filter 36a korrekt und durch das IIR-Filter 36b inkorrekt gefiltert und für das IIR-Filter 36b als Trainingssequenz genutzt, um den eingeschwungenen Zustand zu erhalten. Eine Systemantwort der Filter 36a-c innerhalb der jeweiligen Trainingssequenz kann als ungültige Daten betrachtet werden und wird vom Signalformer 52 entfernt.

Die IIR-Filter 36a-c sind so konfiguriert, dass die Überlappungsbereiche 42 eine Länge aufweisen, die zumindest einer Länge entspricht, die das jeweilige IIR-Filter 36a, 36b bzw. 36c benötigt, um den eingeschwungenen Zustand zu erreichen. Das bedeutet, dass nach dem Überlappungsbereich 42 das jeweilige IIR-Filter 36a-c so weit von vorangegangenen Signalabschnitten des erweiterten Datensignals 27 beeinflusst ist, dass der gefilterte Signalabschnitt 44a-c in Abschnitten 48a-c innerhalb eines Toleranzbereichs gleich ist, als wäre das erweiterte Datensignal 27 durch einen einzigen IIR-Filter gefiltert worden. Die Abschnitte 48a-c bilden abschnittsweise das gefilterte Datensignal 18.

Die rückgekoppelte Filterstruktur 30 umfasst einen Signalformer 52, der ausgebildet ist, um die gefilterten Signalabschnitte 44a-c zu kombinieren, etwa sequentiell aufeinanderfolgend, um das gefilterte Datensignal 18 zu erhalten. Der Signalformer 52 ist ausgebildet, um als ungültig erachtete Datensequenzen, d. h., die Überlappungssequenzen 46a-c, die den Überlappungsbereichen 42 zugeordnet sind, zu entfernen und um die Signalabschnitte 48a-c aneinanderzufügen. Dies ermöglicht, dass das gefilterte Datensignal 18 lediglich solche Signale oder Signalsequenzen aufweist, die von Filtern in einem eingeschwungenen Zustand erhalten wurden.

Verändert sich die Präambel über mehrere Blöcke des erweiterten Datensignals 27 nicht, so kann die Präambel 26-2 in dem gefilterten Block des Ausgangssignals 18 übertragen werden. Alternativ oder zusätzlich kann der Signalformer 52 ausgebildet sein, um eine Systemantwort des eingeschwungenen IIR-Filters 36a basierend auf der Präambel 26-1 dem gefilterten Ausgangssignal 18 voranzustellen oder an einem anderen vordefinierten Ort einzufügen, etwa durch eine Verschiebeoperation oder dergleichen. Da die Präambel 26-1 bzw. 26-2 systemweit bekannt ist und auch die Filterstruktur sowie die Koeffizienten des IIR-Filters 36a bekannt sind, kann eine Systemantwort des IIR-Filters 36a auf die Präambel 26-1 hin berechnet werden.

Alternativ oder zusätzlich kann der Signalformer 52 oder eine weitere Berechnungseinrichtung, etwa die Berechnungseinrichtung 35, ausgebildet sein, um das IIR-Filter 36a in einen (eingeschwungenen) Zustand einzustellen, der erhalten wird, wenn das IIR-Filter 36a die Präambel 26-1 filtert. Das IIR-Filter 36a kann dann ausgebildet sein, um den Signalabschnitt 38a in einem Umfang zu filtern, der die Präambel 26-1 nicht aufweist (verkürzter Signalabschnitt 38a). Vereinfacht ausgedrückt, kann die Systemantwort des Filters 36a auf die Präambel 26-1 hin auch synthetisiert werden, da alle Parameter (Signal und Filterstruktur) bekannt sind. Dies ermöglicht, dass das Filter 36a die Präambel 26-1 nicht filtern (rechnen) muss, so dass Energie hierfür eingespart werden kann und eine Verlustleistung durch die Filterung vermieden werden kann.

Eine Länge der Überlappungsbereiche 42 bezieht sich auf eine Anzahl von Symbolen des erweiterten Datensignals 27, eine Anzahl von Bits desselben und/oder eine Filterlänge (Anzahl von Filter-Taps und/oder Rückkopplungspfaden) des Filters. Die Länge der Überlappungsbereiche 42 kann so gewählt werden, dass diese eine (Trainings-) Länge aufweist, die länger ist als eine Speichertiefe oder eine Koeffizientenanzahl der IIR-Filter 36a-c. Eine Vergrößerung des Überlappungsbereichs 42 führt zu einer Verringerung der IIR-Fehler, die durch die Parallelisierung erhalten werden. Bei einer hinreichend großen Überlappung, d.h. Länge der Trainingssequenz und des Überlappungsbereichs 42, können solche Fehler auf akzeptable oder vernachlässigbare Werte reduziert werden, etwa auf Werte, die sich unterhalb des Rauschens der Übertragung bzw. der Quantisierung im System befinden.

Eine Erhöhung der Länge des Überlappungsbereichs 42 führt auf der anderen Seite zu weniger nutzbaren (gültigen) Ausgangsdaten für jeden Filter 36a-c pro Zeiteinheit und erzwingt dadurch mehr parallele Filter 36a-c um die Zeit für die Berechnung eines Blocks des gefilterten Datensignals 18 gleich zu halten. Es kann also ein Ausgleich zwischen Reduzierung der Fehler der Parallelisierung und dem Mehraufwand der Implementierung geschaffen werden.

Sind die IIR-Filter 28a-c in den Sendeeinrichtungen 10 und/oder 20 als THP-Filter ausgeführt, so können auch die IIR-Filter 36a-c ganz oder teilweise als THP-Filter ausgeführt sein, wobei die IIR-Filter 36a-c bevorzugt gleich bzgl. der Filterstruktur ausgebildet sind.

Gegenüber der Parallelisierung der Signalverarbeitungsketten in den Sendeeinrichtungen 10 und 20, wie sie in den Fig. 1 und 2 dargestellt ist, weist das IIR-Filter 30 eine parallelisierte Struktur des Filters selbst auf. Die Parallelisierung in den Sendeeinrichtungen 10 und 20 kann als äußere Parallelisierung oder Parallelisierungsstufe I bezeichnet werden. Die Parallelisierung innerhalb der einzelnen IIR-Filter kann dahingegen als innere Parallelisierung oder Parallelisierungsstufe II bezeichnet werden. Eine erhaltene Datenlänge des gefilterten Datensignals 18 kann somit bezogen auf das erweiterte Datensignal 27 unverändert sein. Das Referenzsignal 26-1 (Präambel) kann eine Länge aufweisen, die einer Länge des Überlappungsbereichs 42 entspricht.

Die innere Parallelisierung ermöglicht eine schnelle und effiziente Filterung der jeweiligen erweiterten Datensignale. Die einzelnen (Teil)-Filter 36a-c können bei gleichbleibender Filterqualität eine geringere Komplexität (weniger Filterkoeffizienten bzw. Rechenoperationen) verglichen mit einer nicht-parallelisierten Pipelining Filterstruktur aufweisen.

Obwohl die Filterstruktur 30 so beschrieben wurde, dass das erweiterte Datensignal 27 gefiltert wird, können auch andere Signale an die Filterstruktur 30 angelegt, d. h. gefiltert, werden, etwa von einer Empfangseinrichtung empfangene Signale, wie es später erläutert wird.

Das anhand der Filterstruktur 30 beschriebene Konzept zur Parallelisierung ist auch auf FIR-Filter (vorwärtsgekoppelte Filter) anwendbar. Diese können mittels der Überlappungsbereiche 42 und/oder des Referenzsignals 26-1 und/oder 26-2 in einen eingeschwungenen Zustand gebracht (trainiert) werden, um die erhaltenen gefilterten TeilSignale darauf folgend zu kombinieren und um ein monolithisches Signal zu erhalten.

In anderen Worten wird der systematisch immer vorhandene Fehler im IIR (durch das Gedächtnis der Rückkopplung) durch längere Überlappung/Trainingssequenz 42, etwa länger als die Speichertiefe/Koeffizientenanzahl des THP, auf im Übertragungssystem akzeptable Werte reduziert. Die Fehlerwerte bewegen sich bei korrekter Wahl der Trainingslänge unterhalb des Rauschens durch die Übertragung bzw. der Quantisierung im System und bedeuten so praktisch keine Einschränkung in der Genauigkeit des Filters im Vergleich zu einem nicht-parallelisierten, jedoch quantisierten Filter. Mittels dieser angepassten Methode, die auch als Memory-Train-Save (Speicher-Training-Speichern) bezeichnet werden kann, erscheint die Impulsantwort des parallelisierten IIR 30 wieder als ein zusammenhängend gerechnetes Signal. Anstatt wie bei der für FIR-Filter bekannten Overlap-Save (Überlappen-Speichern)-Methode das erste Filterelement mit Nullen vorweg zu speisen, ist die Trainingssequenz beim Memory-Train-Save zu Beginn und am Ende, d.h. erster und letzter Filter in der inneren Parallelisierungsstufe II eine systemweit bekannte Präambel. Dadurch lassen sich die Datensegmente der äußeren Parallelisierungsstufe I ebenfalls aneinanderfügen und das gesamte System erscheint als eine zusammenhängend gerechnete Wellenform. Für das erste Filterelement (IIR-Filter 36a) ist ein Berechnen der Präambel-Filterung praktisch nicht erforderlich. Es kann ein Zurücksetzen der Speicher im IIR/THP-Filter auf die sich durch Rechnung der Präambel ergebenden Werte erfolgen. Auf diesem Weg ergibt sich weniger Verlustleistung im Filter.

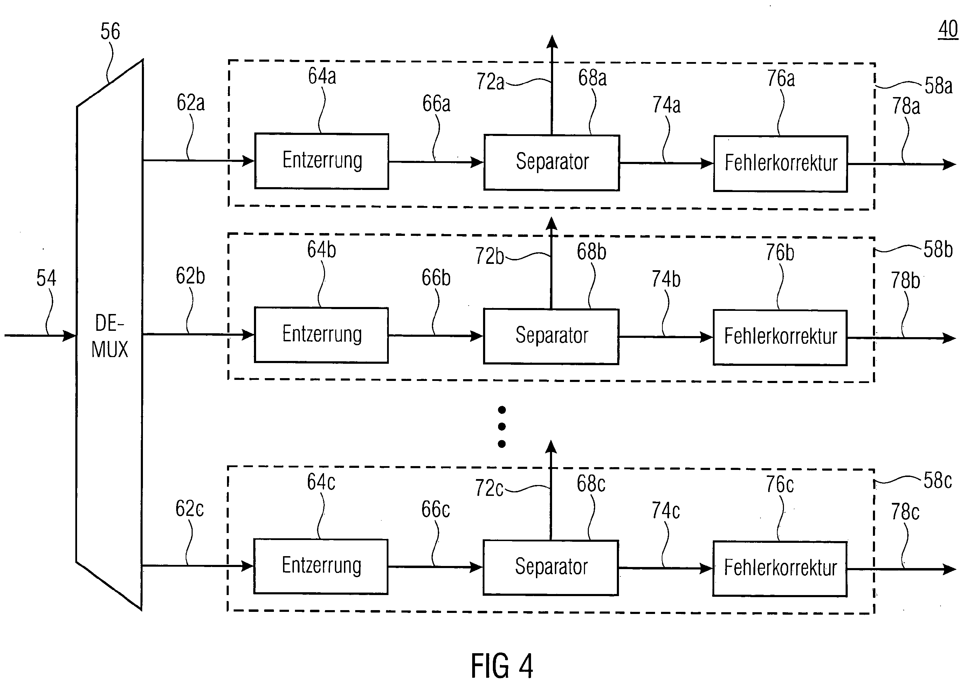

Fig. 4 zeigt ein schematisches Blockschaltbild einer Empfangseinrichtung 40 zum Empfangen eines von einer Sendeeinrichtung gesendeten Ausgangssignals 54. Bei dem Ausgangssignal 54 kann es sich beispielsweise um das Ausgangssignal 12 der Sendeeinrichtungen 10 oder 20 handeln, das über ein Übertragungsmedium wie eine Leitung oder ein Funkmedium empfangen wird. Alternativ kann es sich bei dem Ausgangssignal 54 auch um ein anderes Ausgangssignal handeln, etwa einer Sendeeinrichtung gemäß dem Stand der Technik, da wie vorangehend ausgeführt, das Ausgangssignal 12 gleich erscheint, wie von einer einzelnen Signalverarbeitungskette (Stand der Technik) berechnet. Zwar weist das Ausgangssignal 12 die hinzugefügten Referenzsignale auf, diese können jedoch auch als sich periodisch wiederholender Header eines Datenblocks betrachtet und/oder extrahiert bzw. ignoriert werden.

Die Empfangseinrichtung 40 umfasst einen Demultiplexer 56 und zwei oder mehrere Empfangs-Strukturen 58a-c. In Fig. 4 sind beispielhaft drei Empfangs-Strukturen 58a-c dargestellt, wobei durch die Punkte zwischen der Empfangs-Struktur 58b und 58c angedeutet ist, dass die Empfangseinrichtung 40 auch mehrere Empfangs-Strukturen aufweisen kann. Alternativ kann die Empfangseinrichtung 40 auch lediglich zwei Empfangs-Strukturen aufweisen.

Der Demultiplexer 56 ist ausgebildet, um für jede Empfangs-Struktur 58a-c bzw. für Datensenken, an die die Daten weitergeleitet werden, ein Empfangssignal 62a, 62b bzw. 62c zu erzeugen. Die Empfangs-Strukturen 58a-c sind beispielsweise einer Datensenke, d.h. Empfänger oder Verarbeiter der Daten zugeordnet, so dass der Demultiplexer 56 beispielsweise ausgebildet ist, um das Ausgangssignal 54 in die den jeweiligen Datensenken zugeordneten Empfangssignale 62a-c aufzuteilen.

Die parallelisierte Anordnung der Empfangs-Strukturen 58a-c ermöglicht eine parallelisierte Decodierung und/oder Entzerrung der jeweiligen Empfangssignale 62a-c. Dies ermöglicht einen hohen Datendurchsatz und eine geringe Komplexität der eingesetzten Filter. Insbesondere können die Empfangssignale 62a-c unabhängig und/oder verschieden voneinander entzerrt und/oder decodiert werden.

Die Empfangs-Strukturen 58a-c umfassen jeweils ein Entzerrfilter 64a, 64b bzw. 64c zum Entzerren des Empfangssignals 62a, 62b bzw. 62c. Die Entzerrfilter 64a, 64b und/oder 64c können beispielsweise als vorwärts gerichtete Entzerrung (Feed Forward Equalizer-FFE) ausgeführt sein.

Ein so erhaltenes entzerrtes Empfangssignal 66a, 66b bzw. 66c wird von einem Separator 68a, 68b bzw. 68c empfangen. Der Separator 68a, 68b bzw. 68c ist ausgebildet, um ein Referenzsignal 72a, 72b bzw. 72c ggf. zu separieren, d.h. zu erkennen und auszuwerten, bzw. um das Referenzsignal 72a-c aus dem entzerrten Empfangssignal 66a-c zu entfernen. Bei dem Referenzsignal 72a-c kann es sich beispielsweise um das Referenzsignal 26a-c handeln. Beispielsweise kann der Separator 68a-c ausgebildet sein, um einen Beginn oder Anfang (Start) eines Datenblocks in dem entzerrten Empfangssignal 66a-c zu bestimmen. Beispielsweise ist dem Separator 68a-c ein Inhalt des jeweiligen Referenzsignals 72a-c bekannt, so dass basierend auf einer Vergleichsoperation, wie etwa einer Kreuzkorrelation des entzerrten Empfangssignals 66a-c mit dem Referenzsignal Letzteres erkannt werden kann. Einer oder mehrere Separatoren 68a-c können mit dem Demultiplexer 56 gekoppelt sein, so dass dieser von dem oder den Separatoren 68a-c eine Information empfängt, an welcher Stelle in dem Ausgangssignal 12 das Referenzsignal empfangen oder enthalten ist. Der Multiplexer 56 kann ausgebildet sein, um basierend auf diese Information eine Aufteilung des Ausgangssignals 12 in die Empfangssignale 66a-c zu beeinflussen, d. h. (korrekt) zu synchronisieren.

Gemäß Ausführungsbeispielen ist eine Information bezüglich einer Datenblockgröße der entzerrten Empfangssignale 66a-c in dem jeweiligen Separator 72a-c bekannt, so dass dieser basierend auf einer Zeitmessung zwischen zwei Referenzsignalen in dem entzerrten Empfangssignal 66a-c eine Abschätzung bezüglich eines Frequenz-Offsets bestimmen kann. Dies kann beispielsweise mittels einer Regelung erfolgen, die die Abstände (beispielsweise in Symboltakten) der gefundenen Referenzsignale (Präambeln) überprüft. Der Separator 68a-c kann ferner ausgebildet sein, um eine Frequenz- und Phasen-Synchronisation des Symboltaktes im Empfänger auf das Ausgangssignal 54 bzw. die Empfangssignale 66a-c auszuführen. Hierfür kann der Separator 68a-c entsprechende Filter zur Synchronisationsfehlererkennung (Timing Error Detector) aufweisen. Alternativ oder zusätzlich kann der Separator 68a-c einer Empfangs-Struktur 58a-causgebildet sein, um das jeweilige Referenzsignal 72a-c aus dem entzerrten Empfangssignal 66a, 66b bzw. 66c zu entfernen und/oder um das Referenzsignal 72a-c einer weiteren Berechnungseinrichtung zur Bestimmung der vorangehenden Informationen bereitzustellen.

Alternativ kann die grobe und feine Frequenz- und Phasensynchronisation in nur einem Separator enthalten sein, d. h., ausgeführt werden, der diese Aufgabe global übernimmt. Gemäß einem weiteren Ausführungsbeispiel ist diese Funktion in einem zusätzlichen parallelen Pfad mit Entzerrfilter und Separator implementiert, der nur eine Untermenge der Daten auswertet, um so einen geringen Umfang an Leistung zu verbrauchen.

Vereinfacht ausgedrückt kann der Separator 68a-c oder eine Berechnungseinrichtung ausgebildet sein, um einen zeitlichen Abstand der Referenzinformation in dem jeweiligen Empfangssignal zu bestimmen und um eine Phasenkorrekturinformation basierend auf dem zeitlichen Abstand zu bestimmen oder um die Referenzinformation 72a-c einer Berechnungseinrichtung zur Verfügung zu stellen, die die entsprechende Bestimmung des zeitlichen Abstands sowie der Phasenkorrekturinformation ausführt.

Die Separatoren 68a, 68b und 68c sind ausgebildet, um ein Ausgangssignal 74a, 74b bzw. 74c, das dem entzerrten Empfangssignal 66a, 66b bzw. 66c oder einer von dem Referenzsignal 72a, 72b bzw. 72c separierten Version davon entspricht, einer Berechnungseinrichtung 76a, 76b bzw. 76c der Empfangs-Strukturen 58a, 58b bzw. 58c bereitzustellen. Die Berechnungseinrichtungen 76a-c sind ausgebildet, um basierend auf einer in den Signalen 74a-c enthaltenen Redundanzinformation, etwa basierend auf einer FEC in der Sendeeinrichtung 10 oder 20, eine Fehlerkorrektur auszuführen und um ein Datensignal 78a-c bereitzustellen, das an eine oder mehrere Datensenken weitergeleitet werden kann.

Die Empfangseinrichtung 40 ermöglicht somit eine Parallelisierung der Empfangs-Struktur eines Übertragungssystems.

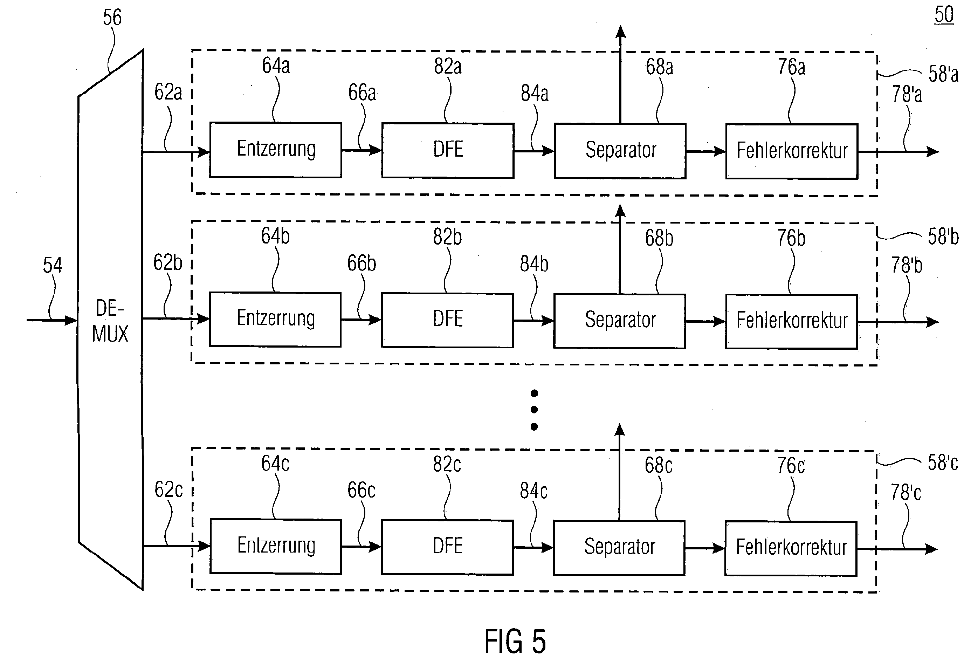

Fig. 5 zeigt ein schematisches Blockschaltbild einer Empfangseinrichtung 50 gemäß einem weiteren Ausführungsbeispiel. Die Empfangseinrichtung 50 weist gegenüber der Empfangseinrichtung 40 in modifizierten Empfangs-Strukturen 58'a-c einen Entzerrfilter 82a, 82b bzw. 82c auf, der als Entscheidungs-Rückkopplungs-Entzerrfilter (Decision Feedback Equalizer - DFE) ausgeführt ist und zwischen den als FIR-Filter ausgeführten Entzerrfiltern 64a, 64b bzw. 64c und den Separatoren 68a, 68b bzw. 68c angeordnet ist. Die DFE-Filter 82a-c weisen eine IIR-Struktur auf. Die DFE-Filter 82a-c sind als parallelisierte IIR-Filter, wie es für das IIR-Filter 30 in Fig. 3 beschrieben ist, ausgeführt, d.h. die DFE-Filter 82a-c weisen eine Mehrzahl von parallelisierten (Teil-)IIR-Filtern 36a-c auf. Die DFE-Filter 82a-c sind ausgebildet, um das entzerrte Signal 66a, 66b oder 66c zu filtern und um ein entsprechend gefiltertes entzerrtes Signal 84a, 84b bzw. 84c auszugeben und dieses den Separatoren 68a, 68b bzw. 68c bereitzustellen. Die Empfangs-Strukturen 58'a-c sind ausgebildet, um ein gegenüber den Datensignalen 78a-c modifiziertes Datensignal 78'a-c auszugeben, das durch die zusätzliche Entzerrung beeinflusst ist.

Die zusätzliche Anordnung der DFE-Filter 82a-c ermöglicht eine Anpassung an zeitvariante Eigenschaften eines Übertragungskanals, über den das Ausgangssignal 54 empfangen wird. Eine Parallelisierung durch die Parallelisierungsstufe II dieser IIR-Filter ermöglicht eine hohe Anzahl von parallelisierten Filteroperationen.

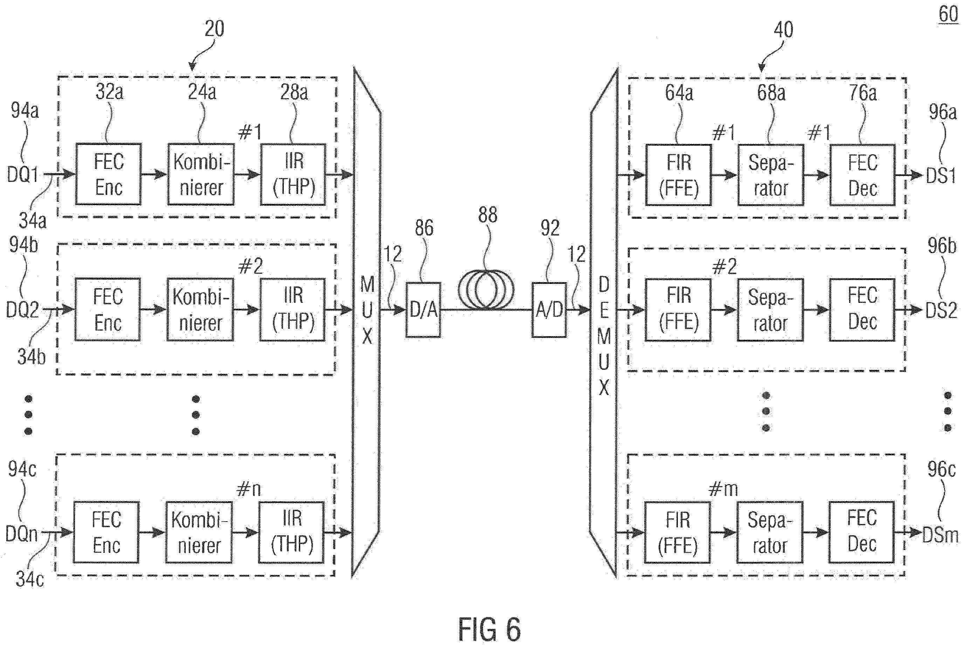

Fig. 6 zeigt ein schematisches Blockschaltbild eines Übertragungssystems 60, das die Sendeeinrichtung 20 und die Empfangseinrichtung 40 umfasst. Alternativ kann das Übertragungssystem 60 auch die Sendeeinrichtung 10 und/oder die Empfangseinrichtung 50 umfassen. Das Übertragungssystem 60 umfasst ferner einen Digital/Analog-Wandler (D/A) 86, der ausgebildet ist, um das Ausgangssignal 12 zu analogisieren, so dass das Ausgangssignal mit einer entsprechenden Signalleistung gesendet werden kann. Das Übertragungssystem 60 umfasst einen Übertragungskanal 88 und einen Analog/Digital-Wandler (A/D) 92, der ausgebildet ist, um das über den Übertragungskanal 88 übertragene Ausgangssignal 12 zu empfangen und für die weitere Verarbeitung zu digitalisieren.

Die Sendeeinrichtung 20 umfasst eine erste Anzahl n von Datenquellen. Die Empfangseinrichtung 40 umfasst eine zweite Anzahl m von Datensenken. Die erste Anzahl n und die zweite Anzahl m weisen jeweils einen Wert von ≥ 2 auf und können einen gleichen Wert aufweisen. Das bedeutet, dass beispielsweise eine Datenquelle 94a-c ein Quellensignal 34a, 34b bzw. 34c bereitstellt oder erzeugt, das einer Datensenke 96a-c zugeordnet ist, was auch als 1:1-Verbindung beschrieben werden kann. Alternativ kann ein Datenquellensignal 34a, 34b und/oder 34c auch zumindest zwei Datensenken 96a, 96b und/oder 96c zugeordnet sein, was eine Anzahl von n<m ermöglicht und als 1:x-Verbindung bezeichnet werden kann. Alternativ oder zusätzlich können auch mehrere, Datenquellen 94a-c jeweils einen Datenstrom 34a-c bereitstellen, der eine Datensenke 96a-c jeweils zugeordnet ist und eine Anzahl von n>m ermöglicht, was auch als x:1-Verbindung beschrieben werden kann. Ferner sind Mischformen der Datenübertragung möglich, etwa n:m-Verbindungen mit n ungleich m, etwa 3:2 oder 2:3. Dies kann bspw. durch eine Konfiguration der Datenquellen/ oder -senken entstehen, aber auch einfach durch eine unterschiedliche Parallelisierung für gleichen Rechendurchsatz. In anderen Worten erfolgt in dem Übertragungssystem 60 die Kanalcodierung und Vorverzerrung nicht im gemultiplexten Seriendatenstrom, sondern bereits in den Daten vor dem Multiplexer, um im Empfänger die Daten wieder richtig für die blockweise Decodierung zuzuordnen, wird ein Framing der Daten durchgeführt. Es kommt in der Datenverarbeitung eine geschachtelte Parallelisierung zum Einsatz. Es gibt eine äußere Parallelisierungsstufe I an den FEC-Blöcken und eine innere Parallelisierungsstufe II innerhalb jedes FEC-Blocks.

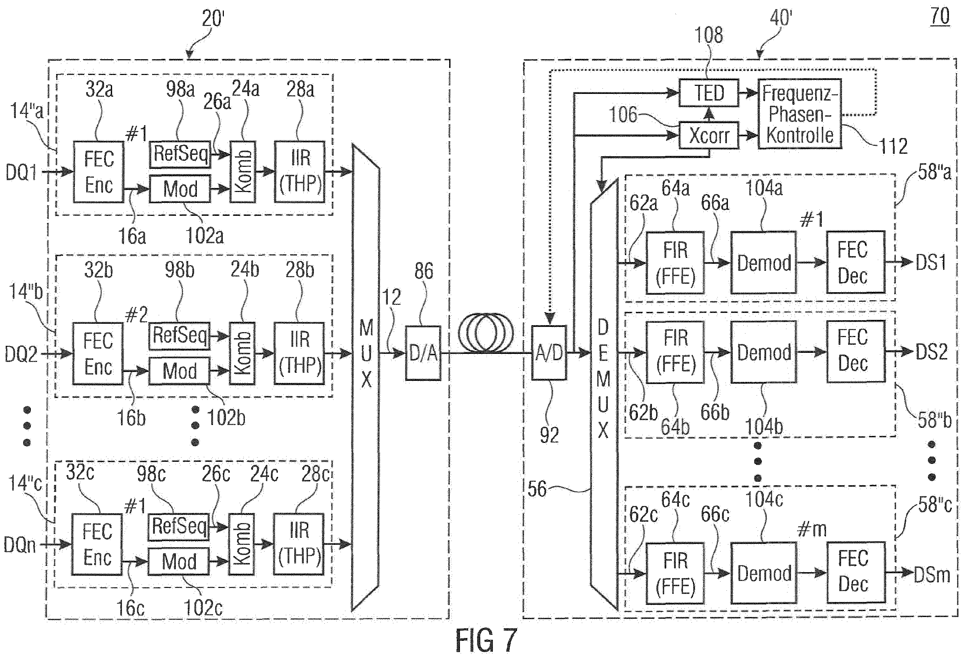

Fig. 7 zeigt ein schematisches Blockschaltbild eines Übertragungssystems 70, das eine gegenüber der Sendeeinrichtung 20 modifizierte Sendeeinrichtung 20' und eine gegenüber der Empfangseinrichtung 40 modifizierte Empfangseinrichtung 40' umfasst. Die Sendeeinrichtung 20' umfasst den D/A-Wandler 86. Die Sendeeinrichtung 20' ist gegenüber der Sendeeinrichtung 20 ferner dahingehend modifiziert, dass Filterstrukturen 14"a-c jeweils einen Signalspeicher 98a-c umfassen, der ausgebildet ist, um das jeweilige Referenzsignal 26a-c zu speichern oder zu erzeugen und um dem jeweiligen Kombinierer 24a-c das Referenzsignal 26a-c bereitzustellen. Die Kombinierer 24a-c können ausgebildet sein, um das Referenzsignal 26a-c vor dem Einfügen in das erweiterte Datensignal zu skalieren. Bei dem Signalspeicher 98a-c kann es sich um einen beliebigen flüchtigen oder nichtflüchtigen Speicher handeln, etwa ein RAM, ROM, (E)EPROM, FLASH oder dergleichen. Alternativ kann anstelle des Signalspeichers 98a-c auch ein Signalgenerator angeordnet sein, um das Referenzsignal 26a-c zu erzeugen.

Die Filterstrukturen 14"a-c umfassen ferner jeweils einen Modulator 102a-c, der zwischen dem jeweiligen Redundanzblock 32a-c und dem jeweiligen Kombinierer 24a-c angeordnet ist und ausgebildet ist, um das Datensignal 16a-c mit einem Modulationsgrad modulieren, bspw. mit einer Frequenz-, Phasen- und/oder Amplitudenmodulation. Bspw. können ein oder mehrere Modulatoren 102a-c ausgebildet sein, das jeweilige Datensignal 16a-c mit einer PAM oder PCM mit einem Modulationsgrad von 2, 3, 4, 5, 6, 7, 8 oder mehr Stufen (Leveln) zu modulieren. Das jeweilige Referenzsignal 16a-c kann von dem jeweiligen Signalspeicher 98a-c mit einem Modulationsgrad erhalten werden, der geringer ist, als der Modulationsgrad des Modulators 102a-c, um eine erhöhte Störsicherheit des Ausgangssignals 12 bezüglich der Referenzsignale 26a-c und bezogen auf die Datensignale 16a-c zu erhalten.

Die Empfangseinrichtung 40' umfasst den A/D-Wandler 92. Gegenüber den Empfangs-Strukturen 58 und 58' modifizierte Empfangs-Strukturen 58"a-c der Empfangseinrichtung 40' weisen einen jeweiligen Demodulator 104a, 104b bzw. 104c auf, der ausgebildet ist, um das entzerrte Signal 66a-c basierend auf dem Modulationsgrad oder -verfahren der Modulatoren 102a-c zu demodulieren. Die Demodulatoren 104a-c können in die Separatoren 68a-c integriert sein, diese umfassen oder ersetzen.

Die Empfangsstruktur 40' umfasst ferner einen Kreuzkorrelator 106, der ausgebildet ist, um das Referenzsignal mittels einer Kreuzkorrelation in einem von dem A/D-Wandler 92 erhaltenen digitalisierten Ausgangssignal, d. h., eine Datensequenz des Ausgangssignals, das das Referenzsignal in gefilterter Form aufweist, zu bestimmen. Ein Ergebnis der Kreuzkorrelation kann bspw. in einem digitalen oder in einem Spannungs- oder Stromsignal bereitgestellt werden, dessen Amplitude ein Maß der Korrelation (Übereinstimmung) des empfangenen und des hinterlegten (erwarteten) Referenzsignals angibt. Der Kreuzkorrelator 106 ist ausgebildet, um dem Demultiplexer 56 Informationen bezüglich der Position des Referenzsignals in dem Ausgangssignal 12 zu liefern, so dass mittels des Demultiplexers 56 eine korrekte Aufteilung des Ausgangssignals 12 in die Empfangssignale 62a-c bzw. des Referenzsignals und des FEC-Blocks auf die Filterbänke (Empfangs-Strukturen 58"a-c) ausführbar ist und/oder eine fehlerhafte Aufteilung korrigierbar ist. Diese Aufteilung wird Block- bzw. Framesynchronisierung genannt. Der Kreuzkorrelator 106 kann dabei eine Kopie eines Filters 64 und/oder ein separates Filter zur Extraktion des Zeitfehlers umfassen.

Die Empfangsstruktur 40' umfasst ferner einen Zeitfehler-Bestimmer 108 (timing error detector - TED), der ausgebildet ist, um das (bekannte bzw. hinterlegte) Referenzsignal und das empfangene Referenzsignal mit einander zu vergleichen, und um einen Zeitversatz (Zeitfehler, timing error) des empfangenen Referenzsignals bzgl. des hinterlegten Referenzsignals zu bestimmen. Der Zeitfehler-Bestimmer 108 kann bspw. als entzerrbasierter TED ausgeführt sein und/oder einen Müller-Müller Algorithmus implementieren und ist ausgebildet, um eine Information bezüglich des Zeitversatzes auszugeben, etwa in einem digitalen oder analogen Signal. Der Zeitfehler-Bestimmer 108 kann dabei eine Kopie eines Filters 64 und/oder ein separates Filter zur Extraktion des Zeitfehlers umfassen.

Die Empfangsstruktur 40' umfasst ferner eine Einrichtung 112 zur Bestimmung bzw. Kontrolle der Frequenz und /oder Phase des Ausgangssignals 12. Die Einrichtung 112 ist ausgebildet, um basierend auf den von dem Zeitfehler-Bestimmer 108 und dem Kreuzkorrelator 106 erhaltenen Informationen Korrekturwerte bezüglich einer Abtastfrequenz und/oder einer Abtastphase für den A/D-Wandler 92 zu ermitteln und den AD-Wandler 92 mittels der Korrekturwerte einzustellen, um eine Synchronisierung des A/D-Wandlers 92 bezüglich des Ausgangssignals 12 zu erhalten und/oder zu erhöhen.

Die Information des Kreuzkorrelator 106 dienen dabei einer gröberen und die Werte des Zeitfehler-Bestimmers 108 einer feineren Einstellung der Frequenz- und/oder Phasenkorrektur (Synchronisierung des A/D-Wandlers 92) des Empfängers 40' auf den Sender 20' bzw. des Übertragungssystems 70.

Die FFE-Blöcke (Entzerrung) 64a-c umfassen eine Modulo-Operation, um eine korrekte Demodulation, der mittels Modulo-Operationen in den THP-Filtern 28a-c gefilterten Datensignale 16a-c zu ermöglichen. Vereinfacht ausgedrückt gehen die empfangenen Daten, Segment mit gefiltertem Referenzsignal vorneweg, in den FIR/FFE hinein. Wenn am Sender ein THP läuft, der als THP ggf. immer eine Modulo-Operation ausführt, wird vorteilhafterweise, ggf. obligatorisch vor einer Demodulation und nach dem FFE am Empfänger auch eine Modulo-Operation gerechnet werden. Bei einer Empfängersynchronisierung wird zuerst von dem Kreuzkorrelator 106 (Xcorr) die Präambel (Referenz-Sequenz) gesucht. Dies muss nicht auf dem gesamten Datenstrom erfolgen, sondern kann auch auf in Abständen aufgezeichneten "Schnappschüssen" durchgeführt werden. Dies ermöglicht reduzierte Geschwindigkeitsanforderungen an die Verarbeitung des Kreuzkorrelators. Der Kreuzkorrelator 106 stellt bspw. Informationen wie die ermittelte Position der Präambel und die Höhe des Korrelations-Peaks über die Zeit (d.h. die Historie dieser Werte für z.B. 20-100 Schnappschüsse) zur Verfügung. Die Position der aktuellen Präambel dient dem Demultiplexer 56 dazu, die Datenblöcke korrekt (Präambel+FEC-Block) auf die Filterbänke zu verteilen.

Der Empfängertakt ist vorzugsweise gleich der Baudrate des Senders 20', d. h. es gibt einen Abtastwert pro Symbol. Eine Überabtastung und deren Steuerung mittels der Frequenz-Phasen-Kontrolle (Einrichtung) 112, z. B. zwei Abtastwerte pro Symbol, und eine digitale Synchronisierung über ein Interpolationsfilter ist möglich, um eine erhöhte Genauigkeit zu erhalten, ist bei hohen anvisierten Taktraten aber in erhöhtem Maße (ggf. extrem) Ressourcenaufwendig.

Alternativ können die Operationen des Kreuzkorrelators 106, des Zeitfehler-Bestimmers 108 und/oder der Einrichtung 112 zur Bestimmung bzw. Kontrolle der Frequenz und /oder Phase des Ausgangssignals 12 ganz oder teilweise von einem Separator 68b ausgeführt werden.

Für die innere Parallelisierungsstufe II werden Kompensationsfilter (Entzerrfilter) und Modulator 102a-c bzw. Kombinierer 24a-c und Demodulator 104a-c bzw. Separator 68a-c parallelisiert. Die Präambel (Referenzsignal) durchläuft ebenfalls die Signalverarbeitung am Sender und wird für das Training der parallelisierten Kompensationsfilter im Empfangsteil mit übertragen. Der Multiplexer und Demultiplexer können im einfachsten Falle in einem Verfahren vergleichbar dem "Round Robin" arbeiten, d.h. von jeder Datenquelle wird nacheinander ein Frame gesendet und im Empfänger werden die Frames nacheinander auf die Datensenken aufgeteilt. Alternativ kann an die Präambel ein kurzes Info-Feld angefügt werden, das beispielsweise eine ID der Datenquelle, eine ID der Datensenke, eine fortlaufende Frame-Nummer und/oder eventuell einen Zeitstempel enthält. Auf diesen Weg können am Sender Frames von beliebigen Datenquellen nach Bedarf gesendet und im Empfänger problemlos den korrekten Datensenken zugeordnet werden.

Die Entzerrer-Struktur der THP-Filter auf Senderseite und FFE auf Empfängerseite kann für sehr hohe Datendurchsätze effizient implementiert werden.

Die vorangehend beschriebenen Ausführungsbeispiele ermöglichen eine Anwendung in Vorrichtungen zur Basisbandübertragung, bei Hochgeschwindigkeits-Datenübertragungen, insbesondere unter Verwendung einer digitalen Filterung sowie in einer parallelisierten digitalen Datenverarbeitung. Signale von unabhängigen Datenquellen können parallel gerechnet werden und erscheinen in einem Ausgangssignal als monolithisch verarbeitete Wellenform, was eine problemlose Decodierung ermöglicht.

Die Präambel, d.h. das Referenzsignal wird beispielsweise im Sender nach dem FEC-Encoder (Redundanz-Block 32a-c) an den jeweiligen FEC-Block angehängt bzw. vorangestellt. Wie es in Fig. 3 beschrieben ist, kann eine vorangestellte Präambel auch an einem Ende des gefilterten Signals von einem Filter ausgegeben werden.

Die Präambel ist senderseitig einsetzbar, um als Trainingssequenz für die THP (Teil-Filter) zu dienen, um eine Parallelisierung (Parallelisierungsstufe I) zu ermöglichen. Die Präambel kann ferner als Trainingssequenz für die FIR-Filter (Entzerrung 64a-c) dienen, um eine Parallelisierung zu ermöglichen. Ferner ist die Präambel eingesetzt, um als Markierung für einen Block-Start oder Block-Ende für die FEC (Fehlerkorrektur 76a-c) bestimmt zu werden. Der Block-Start kann über eine Korrelation mit der bekannten Präambel gefunden werden. Eine Überprüfung der zeitlichen Abstände (ggf. in Symboltakten) der gefundenen Präambeln kann für eine grobe Frequenz-Offset-Schätzung eingesetzt werden. Ferner kann die Präambel für eine feine Frequenz- und Phasen-Synchronisation eingesetzt werden. Hierfür können Timing Error-Detektoren als spezielle Filter für eine präzisere Regelung eingesetzt werden.

Die genannten Verwendungen sind nicht abschließend. Unterschiedliche Verwendungen können zu einer unterschiedlichen Anforderung an eine Länge der Präambel führen. Während für eine Bestimmung des Block-Starts eines Block-Endes und/oder einer groben Frequenz-Synchronisierung eine vergleichsweise lange Präambel erforderlich sein kann, um eine robuste Berechnung mittels der Kreuzkorrelation zu ermöglichen, kann die Länge der Präambel in zunehmendem Maße abnehmen, wenn lediglich eine Parallelisierung der THP-Blöcke (Parallelisierungsstufe II), eine feine Phasen- und/oder Frequenz-Synchronisierung bzw. eine Parallelisierung der FFE-Blöcke (64a-c) für eine Systemauslegung zugrunde gelegt wird. Die Auslegung kann sich bei voneinander verschiedenen Übertragungskanälen 88 ändern. Zur Detektion eines Block-Starts kann eine Präambel beispielsweise zumindest 30, zumindest 40 oder zumindest 50 Symbole lang sein.

Vorangegangene Ausführungsbeispiele können auch als softwarebasierte Filter realisiert werden, bei denen parallelisierte Filter- oder Empfangs-Strukturen basierend auf einer Vielzahl von parallel arbeitenden Rechenkernen implementiert sind.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein. Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahin gehend wirksam ist, eines der Verfahren durchzuführen, wenn das Computerprogrammprodukt auf einem Computer abläuft. Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinenlesbaren Träger gespeichert ist.

Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft. Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren aufgezeichnet ist.

Ein weiteres Ausführungsbeispiel des erfindungsgemäßen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahin gehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, die dahin gehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

## Patentansprüche

1. Sendeeinrichtung (10; 20; 20') zum Senden eines Ausgangssignals (12) mit folgenden Merkmalen:
einer ersten Filterstruktur (14a; 14'a) mit einem ersten Kombinierer (24a), der ausgebildet ist, um ein erstes Datensignal (16a) um ein erstes Referenzsignal (26a) zu erweitern, um ein erstes erweitertes Datensignal (27a) zu erhalten, und mit einem ersten IIR-Filter (28a) zum Filtern des ersten erweiterten Datensignals (27a), um ein erstes gefiltertes Datensignal (18a) zu erhalten;
einer zweiten Filterstruktur (14b; 14'b) mit einem zweiten Kombinierer (24b), der ausgebildet ist, um ein zweites Datensignal (16b) um ein zweites Referenzsignal (26b) zu erweitern, um ein zweites erweitertes Datensignal (27b) zu erhalten, und mit einem zweiten IIR-Filter (28b) zum Filtern des zweiten erweiterten Datensignals (27b), um ein zweites gefiltertes Datensignal (18b) zu erhalten;
einem Multiplexer (22) zum Kombinieren des ersten (18a) und des zweiten (18b) gefilterten Datensignals, um das Ausgangssignal (12) basierend auf den gefilterten Datensignalen (18a, 18b) zu erhalten;
wobei eine Systemantwort des ersten IIR-Filters (28a) basierend auf dem ersten Referenzsignal (26a) einer Systemantwort des zweiten IIR-Filters (28b) basierend auf dem zweiten Referenzsignal (26b) entspricht.
wobei der erste und der zweite Kombinierer (24a, 24b) ausgebildet sind, um das Referenzsignal (26a, 26b) vor (26a-1, 26b-1) und nach (26a-2, 26b-2) einem Datenblock des Datensignals (16a, 16b) einzufügen und bei der die IIR-Filter (28a-b), der Multiplexer (22) oder ein Signalformer (52) ausgebildet ist, um ein erhaltenes gefiltertes Referenzsignal (26a-1', 26b-1') basierend auf dem vorangestellten Referenzsignal (26a-1, 26b-1) zu verwerfen, so dass das Ausgangssignal (12) die gefilterten Datensignale (16a', 16b') und die gefilterten nach dem Datenblock eingefügten Referenzsignale (26a-2', 26b-2') aufweist und die gefilterten vor dem Datenblock eingefügten Referenzsignale (26a-1', 26b-1') nicht aufweist.

2. Sendeeinrichtung gemäß Anspruch 1, mit zumindest einer dritten Filterstruktur (14c; 14'c) mit einem dritten Kombinierer (24c), der ausgebildet ist, um ein dritten Datensignal (16c) um ein drittes Referenzsignal (26c) zu erweitern, um ein drittes erweitertes Datensignal (27c) zu erhalten und mit einem dritten IIR-Filter (28c) zum Filtern des dritten erweiterten Datensignals (27c), um ein drittes gefiltertes Datensignal (18c) zu erhalten;
wobei der Multiplexer (22) ausgebildet ist, um das erste (18a), zweite (18b) und das zumindest dritte (18c) gefilterte Datensignal zu kombinieren, um das Ausgangssignal (12) zu erhalten;
wobei die Systemantwort des ersten IIR-Filters (28a) basierend auf dem ersten Referenzsignal (26a) der Systemantwort des zweiten IIR-Filters (28b) basierend auf dem zweiten Referenzsignal (26b) und einer Systemantwort des dritten IIR-Filters (28c) basierend auf dem dritten Referenzsignal (26c) entspricht.

3. Sendeeinrichtung gemäß Anspruch 1 oder 2, bei der die erste Filterstruktur (14'a) eine erste Berechnungseinrichtung (32a) umfasst, die ausgebildet ist, um eine erste Redundanzinformation bezüglich eines ersten Quellensignals (34a) zu berechnen und um die erste Redundanzinformation mit dem ersten Quellensignal (34a) zu kombinieren, um das erste Datensignal (16a) zu erhalten und bei der die zweite Filterstruktur (14'b) eine zweite Berechnungseinrichtung (32b) umfasst, die ausgebildet ist, um eine zweite Redundanzinformation bezüglich eines zweiten Quellensignals (34b) zu berechnen und um die zweite Redundanzinformation mit dem zweiten Quellensignal (34b) zu kombinieren, um das zweite Datensignal (16b) zu erhalten.

4. Sendeeinrichtung gemäß einem der vorangehenden Ansprüche, bei der der erste (24a) oder zweite (24b) Kombinierer ausgebildet ist, um das erste (26a) bzw. zweite (26b) Referenzsignal mit einem Modulationsgrad zu kombinieren, wobei der Modulationsgrad geringer ist, als ein Modulationsgrad, mit welchem das erste oder zweite Datensignal (16a, 16b) moduliert ist.

5. Sendeeinrichtung gemäß einem der vorangehenden Ansprüche, bei der das erste und das zweite IIR-Filter (28a, 28b) Folgendes umfasst:
eine Mehrzahl von rückgekoppelten Filtern (36a-c), die ausgebildet sind, um einen Signalabschnitt (38a-c) des ersten (27a) oder zweiten (27b) erweiterten Datensignals zu filtern, um eine Mehrzahl von gefilterten Signalabschnitten (44a-c) gemäß der Mehrzahl von rückgekoppelten Filtern (36a-c) zu erhalten, wobei zwei aufeinanderfolgende Signalabschnitte (38a, 38b) mit einander in einem Überlappungsbereich (42) teilweise überlappen;
einem Signalformer (52), der ausgebildet ist, um die Mehrzahl von gefilterten Signalabschnitten (44a-c) zu dem gefilterten Datensignal (18) zu kombinieren und um Überlappungssequenzen (46a-c) der gefilterten Signalabschnitte (44a-c), die dem Überlappungsbereich (42) eines ersten (38a) und eines zweiten (38b) gefilterten Signalabschnitts zugeordnet sind zu verwerfen, wobei der Signalformer ausgebildet ist, um zwei gefilterte Signalabschnitte (28a, 38b) zweier aufeinanderfolgender Signalabschnitte zu kombinieren und um eine Überlappungssequenz (46b) die dem Überlappungsbereich (42) des auf den ersten (36a) folgenden zweiten (36b) gefilterten Signalabschnitts zu verwerfen.

6. Sendeeinrichtung gemäß Anspruch 5, wobei der Multiplexer (22) eine erste Parallelisierungsstufe einer Signalverarbeitung des ersten und zweiten Datensignals (16a, 16b) bildet, wobei das erste IIR-Filter (28a) eine zweite Parallelisierungsstufe der Signalverarbeitung des ersten Datensignals (16a) bildet und wobei das zweite IIR-Filter (28b) eine zweite Parallelisierungsstufe der Signalverarbeitung des zweiten Datensignals (16b) bildet.

7. Empfangseinrichtung (40; 40'; 50) zum Empfangen eines Ausgangssignals (12; 54) mit folgenden Merkmalen:
einem Demultiplexer (56) zum Erzeugen eines ersten (62a) und eines zweiten (62b) Empfangssignals aus dem empfangenen Ausgangssignal (12), wobei das Ausgangssignal (12) Referenzsignale (26a-c; 72a, 72b) zwischen Datenblöcken (16a'-16c') des Ausgangssignals (12) aufweist, die eine systemweit bekannte Präambel sind;
einer ersten Empfangs-Struktur (58a; 58'a) mit einem ersten Entzerrfilter (64a) zum Entzerren des ersten Empfangssignals (62a) und mit einem ersten Separator (68a), der ausgebildet ist, um ein erstes Referenzsignal (72a) von dem entzerrten ersten Empfangssignal (66a) zu separieren;
einer zweiten Empfangs-Struktur (58b; 58'b) mit einem zweiten Entzerrfilter (64b) zum Entzerren des zweiten Empfangssignals (62b) und mit einem zweiten Separator (68b), der ausgebildet ist, um ein zweites Referenzsignal (72b) von dem entzerrten zweiten Empfangssignal (66b) zu separieren.

8. Empfangseinrichtung gemäß Anspruch 7, die ferner eine Berechnungseinrichtung (68a-c) umfasst, die ausgebildet ist, um einen zeitlichen Abstand der Referenzinformationen (72a-b) in dem ersten (62a) oder zweiten (62b) Empfangssignal zu bestimmen und um eine Phasenkorrekturinformation basierend auf dem zeitlichen Abstand zu bestimmen.

9. Empfangseinrichtung gemäß Anspruch 7 oder 8, bei der die erste (58'a) oder zweite (58'b) Empfangs-Struktur ferner eine vorwärtsgekoppelte Filterstruktur (64a-b) mit einer Mehrzahl von vorwärtsgekoppelten Filtern umfasst, die ausgebildet sind, um einen Signalabschnitt (38a-c) des ersten (62a) oder zweiten (64b) Empfangssignals zu filtern, um eine Mehrzahl von gefilterten Signalabschnitten (44a-c) gemäß der Mehrzahl von vorwärtsgekoppelten Filtern zu erhalten, wobei zwei aufeinanderfolgende Signalabschnitte (38a, 38b) mit einander in einem Überlappungsbereich (42) teilweise überlappen;
einem Signalformer (52), der ausgebildet ist, um die Mehrzahl von gefilterten Signalabschnitten (44a-c) zu einem gefilterten Datensignal (66a-b) zu kombinieren und um Überlappungssequenzen (46a-c) der gefilterten Signalabschnitte (44a-c), die dem Überlappungsbereich eines ersten (38a) und eines zweiten (38b) gefilterten Signalabschnitts zugeordnet sind zu verwerfen, wobei der Signalformer (52) ausgebildet ist, um zwei gefilterte Signalabschnitte (38a, 38b) zweier aufeinanderfolgender Signalabschnitte zu kombinieren und um eine Überlappungssequenz (46b) die dem Überlappungsbereich (42) des auf den ersten (36a) folgenden zweiten (36b) gefilterten Signalabschnitts zu verwerfen.

10. Empfangseinrichtung gemäß Anspruch 7 oder 8, wobei die erste Empfangs-Struktur (58'a) eine erste rückgekoppelte Filterstruktur (82a-b) mit einer Mehrzahl von rückgekoppelten Filtern (36a-c) umfasst, wobei die zweite Empfangs-Struktur (58'b) eine zweite rückgekoppelte Filterstruktur (82a-b) mit einer Mehrzahl von rückgekoppelten Filtern (36a-c) umfasst, wobei der Demultiplexer (22) eine erste Parallelisierungsstufe einer Signalverarbeitung des ersten und zweiten Empfangssignals (62a, 62b) bildet, wobei die erste rückgekoppelte Filterstruktur (82a) eine zweite Parallelisierungsstufe der Signalverarbeitung des ersten Empfangssignals (62a) bildet, und wobei die zweite rückgekoppelte Filterstruktur (82b) eine zweite Parallelisierungsstufe der Signalverarbeitung des zweiten Empfangssignals (62b) bildet.

11. Übertragungssystem (60; 70) mit folgenden Merkmalen:
einer Sendeeinrichtung (10; 20; 20') gemäß einem der Ansprüche 1-6;
einer Empfangseinrichtung (30; 40; 40') gemäß einem der Ansprüche 7-10;
wobei die Sendeeinrichtung (10; 20; 20') und die Empfangseinrichtung (30; 40; 40') über ein Übertragungsmedium (88) gekoppelt sind.

12. Verfahren zum Senden eines Ausgangssignals (12) mit folgenden Merkmalen:
Erweitern eines ersten Datensignals (16a) mit einem ersten Referenzsignal (26a), um ein erstes erweitertes Datensignal (27a) zu erhalten;
Filtern des ersten erweiterten Datensignals (27a) mit einem ersten IIR-Filter (28a), um ein erstes gefiltertes Datensignal (18a) zu erhalten;
Erweitern eines zweiten Datensignals (16b) mit einem zweiten Referenzsignal (26b), um ein zweites erweitertes Datensignal (27b) zu erhalten;
Filtern des zweiten erweiterten Datensignals (27b) mit einem zweiten IIR-Filter (28b), um ein zweites gefiltertes Datensignal (18b) zu erhalten;
Kombinieren des ersten (18a) und des zweiten (18b) gefilterten Datensignals, um das Ausgangssignal (12) basierend auf den gefilterten Datensignalen (18a, 18b) zu erhalten;
wobei eine Systemantwort des ersten IIR-Filters (28a) basierend auf dem ersten Referenzsignal (26a) einer Systemantwort des zweiten IIR-Filters (28b) basierend auf dem zweiten Referenzsignal (26b) entspricht;
wobei das Referenzsignal (26a, 26b) vor (26a-1, 26b-1) und nach (26a-2, 26b-2) einem Datenblock des Datensignals (16a, 16b) eingefügt wird und wobei ein erhaltenes gefiltertes Referenzsignal (26a-1', 26b-1') basierend auf dem vorangestellten Referenzsignal (26a-1, 26b-1) verworfen wird, so dass das Ausgangssignal (12) die gefilterten Datensignale (16a', 16b') und die gefilterten nach dem Datenblock eingefügten Referenzsignale (26a-2', 26b-2') aufweist und die gefilterten vor dem Datenblock eingefügten Referenzsignale (26a-1', 26b-1') nicht aufweist.

13. Verfahren zum Empfangen eines Ausgangssignals (12; 54) mit folgenden Merkmalen:
Erzeugen eines ersten (62a) und eines zweiten (62b) Empfangssignals aus dem empfangenen Ausgangssignal (12; 54), wobei das Ausgangssignal (12) Referenzsignale (26a-c; 72a, 72b) zwischen Datenblöcken (16a'-16c') des Ausgangssignals (12) aufweist, die eine systemweit bekannte Präambel sind;
Entzerren (64a) des ersten Empfangssignals (62b);
Separieren (68a) eines ersten Referenzsignals (72a) von dem entzerrten ersten Empfangssignal (66a);
Entzerren (64b) des zweiten Empfangssignals (62a);
Separieren (68b) eines zweiten Referenzsignals (72b) von dem entzerrten zweiten Empfangssignal (66b); und
Filtern eines Signalabschnitt (38a-c) des ersten (66a) oder zweiten (66b) entzerrten Empfangssignals mit einer Mehrzahl von rückgekoppelten Filtern (36a-c), um eine Mehrzahl von gefilterten Signalabschnitten (44a-c) gemäß der Mehrzahl von rückgekoppelten Filtern (36a-c) so zu erhalten, dass zwei aufeinanderfolgende Signalabschnitte (38a, 38b) mit einander in einem Überlappungsbereich (42) teilweise überlappen;
Kombinieren der Mehrzahl von gefilterten Signalabschnitten (44a-c) zu dem gefilterten Datensignal (84a-b) und Verwerfen von Überlappungssequenzen (46a-c) der gefilterten Signalabschnitte (44a-c), die dem Überlappungsbereich eines ersten (38a) und eines zweiten (38b) gefilterten Signalabschnitts zugeordnet sind; und
Kombinieren von zwei gefilterten Signalabschnitten (38a, 38b) zweier aufeinanderfolgender Signalabschnitte und Verwerfen einer Überlappungssequenz (46b) die dem Überlappungsbereich (42) des auf den ersten (36a) folgenden zweiten (36b) gefilterten Signalabschnitts.

14. Verfahren gemäß Anspruch 13, das ferner folgenden Schritt umfasst:
Synchronisieren des Erzeugens des ersten (62a) und des zweiten (62b) Empfangssignals bezüglich eines Starts und/oder eines Endes einer Blockgröße, einer Frequenz oder einer Phase des empfangenen Ausgangssignals (12) oder des ersten (62a) und des zweiten (62b) Empfangssignals basierend auf einer Filterung und Detektion (106) eines Referenzsignals (26a-2', 26b-2', 26c-2'), welches mit dem Verfahren gemäß Anspruch 22 gesendet wird.

15. Computerprogramm mit einem Programmcode zur Durchführung des Verfahrens nach einem der Ansprüche 12 bis 14, wenn das Programm auf einem Computer läuft.

## Claims

1. Transmitting means (10; 20; 20') for transmitting an output signal (12), comprising:
a first filter structure (14a; 14'a) comprising a first combiner (24a) configured to extend a first data signal (16a) by a first reference signal (26a) in order to obtain a first extended data signal (27a), and comprising a first IIR filter (28a) for filtering the first extended data signal (27a) in order to obtain a first filtered data signal (18a);
a second filter structure (14b; 14'b) comprising a second combiner (24b) configured to extend a second data signal (16b) by a second reference signal (26b) in order to obtain a second extended data signal (27b), and comprising a second IIR filter (28b) for filtering the second extended data signal (27b) in order to obtain a second filtered data signal (18b);
a multiplexer (22) for combining the first (18a) and second (18b) filtered data signals in order to obtain the output signal (12) based on the filtered data signals (18a, 18b);
wherein a system response of the first IIR filter (28a) based on the first reference signal (26a) corresponds to a system response of the second IIR filter (28b) based on the second reference signal (26b)
wherein the first and second combiners (24a, 24b) are configured to insert the reference signal (26a, 26b) in front of (26a-1, 26b-1) and after (26a-2, 26b-2) a data block of the data signal (16a, 16b), and wherein the IIR filters (28a-b), the multiplexer (22) or a signal former (52) are configured to reject an obtained filtered reference signal (26a-1', 26b-1') based on the reference signal (26a-1, 26b-1) placed in front of so that the output signal (12) comprises the filtered data signals (16a', 16b') and the filtered reference signals (26a-2', 26b-2') inserted after the data block and does not comprise the filtered reference signals (26a-1', 26b-1') inserted in front of the data block.

2. Transmitting means according to claim 1, comprising at least a third filter structure (14c; 14'c) comprising a third combiner (24c) configured to extend a third data signal (16c) by a third reference signal (26c) in order to obtain a third extended data signal (27c), and comprising a third IIR filter (28c) for filtering the third extended data signal (27c) in order to obtain a third filtered data signal (18c);
wherein the multiplexer (22) is configured to combine the first (18a), second (18b) and at least third (18c) filtered data signals in order to obtain the output signal (12);
wherein the system response of the first IIR filter (28a) based on the first reference signal (26a) corresponds to the system response of the second IIR filter (28b) based on the second reference signal (26b) and to a system response of the third IIR filter (28c) based on the third reference signal (26c).

3. Transmitting means according to claim 1 or 2, wherein the first filter structure (14'a) includes a first calculating means (32a) configured to calculate first redundancy information with regard to a first source signal (34a) and to combine the first redundancy information with the first source signal (34a) in order to obtain the first data signal (16a), and wherein the second filter structure (14'b) includes a second calculating means (32b) configured to calculate second redundancy information with regard to a second source signal (34b) and to combine the second redundancy information with the second source signal (34b) in order to obtain the second data signal (16b).

4. Transmitting means according to any one of the preceding claims, wherein the first (24a) or the second (24b) combiner is configured to combine the first (26a) or the second (26b) reference signal, respectively, with a modulation degree, wherein the modulation degree is lower than a modulation degree with which the first or the second data signal (16a, 16b) is modulated.

5. Transmitting means according to any one of the preceding claims, wherein the first and second IIR filters (28a, 28b) include:
a plurality of feedback filters (36a-c) configured to filter a signal portion (38a-c) of the first (27a) or the second (27b) extended data signal in order to obtain a plurality of filtered signal portions (44a-c) according to the plurality of feedback filters (36a-c), wherein two successive signal portions (38a, 38b) partly overlap in an overlapping portion (42);
a signal former (52) configured to combine the plurality of filtered signal portions (44a-c) to the filtered data signal (18) and to reject overlapping sequences (46a-c) of the filtered signal portions (44a-c) allocated to the overlapping portion (42) of a first (38a) and a second (38b) filtered signal portion, wherein the signal former is configured to combine two filtered signal portions (28a, 38b) of two successive signal portions and to reject an overlapping sequence (46b) allocated to the overlapping portion (42) of the second (36b) filtered signal portion following the first (36a).

6. Transmitting means according to claim 5, wherein the multiplexer (22) forms a first parallelization level of a signal processing of the first and second data signals (16a, 16b), wherein the first IIR filter (28a) forms a second parallelization level of the signal processing of the first data signal (16a) and wherein the second IIR filter (28b) forms a second parallelization level of the signal processing of the second data signal (16b).

7. Receiving means (40; 40', 50) for receiving an output signal (12; 54), comprising:
a demultiplexer (56) for generating a first (62a) and a second (62b) receiving signal from the received output signal (12); wherein the output signal (12) comprises reference signals (26a-c; 72a, 72b) between data blocks (16a'-16c') of the output signal (12), which are a system-wide known preamble;
a first receiving structure (58a; 58'a) comprising a first equalization filter (64a) for equalizing the first receiving signal (62a), and comprising a first separator (68a) configured to separate a first reference signal (72a) from the equalized first receiving signal (66a);
a second receiving structure (58b; 58'b) comprising a second equalization filter (64b) for equalizing the second receiving signal (62b), and comprising a second separator (68b) configured to separate a second reference signal (72b) from the equalized second receiving signal (66b).

8. Receiving means according to claim 7, further including a calculating means (68a-c) configured to calculate a temporal distance of the reference information (72a-b) in the first (62a) or the second (62b) receiving signal and to determine phase correction information based on the temporal distance.

9. Receiving means according to claim 7 or 8, wherein the first (58'a) or the second (58'b) receiving structure further includes a feedforward filter structure (64a-b) comprising a plurality of feedforward filters configured to filter a signal portion (38a-c) of the first (62a) or the second (64b) receiving signal in order to obtain a plurality of filtered signal portions (44a-c) according to the plurality of feedforward filters, wherein two successive signal portions (38a, 38b) partially overlap in an overlapping portion (42);
a signal former (52) configured to combine the plurality of filtered signal portions (44a-c) to a filtered data signal (66a-b) and to reject overlapping sequences (46a-c) of the filtered signal portions (44a-c) allocated to the overlapping portion of a first (38a) and a second (38b) filtered signal portion, wherein the signal former (52) is configured to combine two filtered signal portions (38a, 38b) of two successive signal portions and to reject an overlapping sequence (46b) allocated to the overlapping portion (42) of the second (36b) filtered signal portion following the first (36a).

10. Receiving means according to claim 7 or 8, wherein the first receiving structure (58'a) includes a first feedback filter structure (82a-b) comprising a plurality of feedback filters (36a-c), wherein the second receiving structure (58'b) includes a second feedback filter structure (82a-b) comprising a plurality of feedback filters (36a-c), wherein the demultiplexer (22) forms a first parallelization level of a signal processing of the first and second receiving signals (62a, 62b), wherein the first feedback filter structure (82a) forms a second parallelization level of the signal processing of the first receiving signal (62a) and wherein the second feedback filter structure (82b) forms a second parallelization level of the signal processing of the second receiving signal (62b).

11. Transfer system (60; 70) comprising:
a transmitting means (10; 20; 20') according to any one of claims 1 to 6;
a receiving means (30; 40; 40') according to any one of claims 7 to 10;
wherein the transmitting means (10; 20; 20') and the receiving means (30; 40; 40') are coupled via a transfer medium (88).

12. Method for transmitting an output signal (12), comprising:
extending a first data signal (16a) by a first reference signal (26a) in order to obtain a first extended data signal (27a);
filtering the first extended data signal (27a) with a first IIR filter (28a) in order to obtain a first filtered data signal (18a);
extending a second data signal (16b) by a second reference signal (26b) in order to obtain a second extended data signal (27b);
filtering the second extended data signal (27b) with a second IIR filter (28b) in order to obtain a second filtered data signal (18b);
combining the first (18a) and second (18b) filtered data signals in order to obtain the output signal (12) based on the filtered data signals (18a, 18b);
wherein a system response of the first IIR filter (28a) based on the first reference signal (26a) corresponds to a system response of the second IIR filter (28b) based on the second reference signal (26b),
wherein the reference signal (26a, 26b) is inserted in front of (26a-1, 26b-1) and after (26a-2, 26b-2) a data block of the data signal (16a, 16b), and wherein an obtained filtered reference signal (26a-1', 26b-1') is rejected based on the reference signal (26a-1, 26b-1) placed in front of so that the output signal (12) comprises the filtered data signals (16a', 16b') and the filtered reference signals (26a-2', 26b-2') inserted after the data block and does not comprise the filtered reference signals (26a-1', 26b-1') inserted in front of the data block.

13. Method for receiving an output signal (12; 54), comprising:
generating a first (62a) and a second (62b) receiving signal from the received output signal (12; 54); wherein the output signal (12) comprises reference signals (26a-c; 72a, 72b) between data blocks (16a'-16c') of the output signal (12), which are a system-wide known preamble;
equalizing (64a) the first receiving signal (62b);
separating (68a) a first reference signal (72a) from the equalized first receiving signal (66a);
equalizing (64b) the second receiving signal (62a);
separating (68b) a second reference signal (72b) from the equalized second receiving signal (66b); and
filtering a signal portion (38a-c) of the first (66a) or the second (66b) equalized receiving signal with a plurality of feedback filters (36a-c) in order to obtain a plurality of filtered signal portions (44a-c) according to the plurality of feedback filters (36a-c) in such a way that two successive signal portions (38a, 38b) partially overlap in an overlapping portion (42);
combining the plurality of filtered signal portions (44a-c) to the filtered data signal (84a-b) and rejecting overlapping sequences (46a-c) of the filtered signal portions (44a-c) allocated to the overlapping portion of a first (38a) and a second (38b) filtered signal portion; and
combining two filtered signal portions (38a, 38b) of two successive signal portions and rejecting an overlapping sequence (46b) allocated to the overlapping portion (42) of the second (36b) filtered signal portion following the first (36a).

14. Method according to claim 13, further comprising:
synchronizing the generation of the first (62a) and second (62b) receiving signals with respect to a start and/or an end of a block size, a frequency or a phase of the received output signal (12) or the first (62a) and second (62b) receiving signals based on filtering and detecting (106) a reference signal (26a-2', 26b-2', 26c-2') which is transmitted using the method according to claim 22.

15. Computer program having a program code for performing the method according to any one of the claims 12 to 14 when the program runs on a computer.

## Revendications

1. Dispositif d'émission (10; 20; 20') destiné à émettre un signal de sortie (12), aux caractéristiques suivantes:
une première structure de filtre (14a; 14'a) avec un premier combineur (24a) qui est conçu pour étendre un premier signal de données (16a) par un premier signal de référence (26a) pour obtenir un premier signal de données étendu (27a), et avec un premier filtre IIR (28a) destiné à filtrer le premier signal de données étendu (27a) pour obtenir un premier signal de données filtré (18a);
une deuxième structure de filtre (14b; 14'b) avec un deuxième combineur (24b) qui est conçu pour étendre un deuxième signal de données (16b) par un deuxième signal de référence (26b) pour obtenir un deuxième signal de données étendu (27b), et un deuxième filtre IIR (28b) destiné à filtrer le deuxième signal de données étendu (27b) pour obtenir un deuxième signal de données filtré (18b);
un multiplexeur (22) destiné à combiner le premier (18a) et le deuxième (18b) signal de données filtré pour obtenir le signal de sortie (12) sur base des signaux de données filtrés (18a, 18b);
dans lequel une réponse de système du premier filtre IIR (28a) sur base du premier signal de référence (26a) correspond à une réponse de système du deuxième filtre IIR (28b) sur base du deuxième signal de référence (26b),
dans lequel le premier et le deuxième combineur (24a, 24b) sont conçus pour insérer le signal de référence (26a, 26b) avant (26a-1, 26b-1) et après (26a-2, 26b-2) un bloc de données du signal de données (16a, 16b), et dans lequel les filtres IIR (28a et b), le multiplexeur (22) ou un metteur en forme de signal (52) est conçu pour rejeter un signal de référence filtré reçu (26a-1', 26b-1') sur base du signal de référence précédent (26a-1, 26b-1), de sorte que le signal de sortie (12) présente les signaux de données filtrés (16a', 16b') et les signaux de référence filtrés (26a-2', 26b-2') insérés après le bloc de données et ne présente pas les signaux de référence filtrés (26a-1', 26b-1') insérés avant le bloc de données.

2. Dispositif d'émission selon la revendication 1, avec au moins une troisième structure de filtre (14c, 14'c) avec un troisième combineur (24c) qui est conçu pour étendre un troisième signal de données (16c) par un troisième signal de référence (26c) pour obtenir un troisième signal de données étendu (27c), et avec un troisième filtre IIR (28c) destiné à filtrer le troisième signal de données étendu (27c) pour obtenir un troisième signal de données filtré (18c);
dans lequel le multiplexeur (22) est conçu pour combiner le premier (18a), le deuxième (18b) et l'au moins troisième (18c) signal de données filtré pour obtenir le signal de sortie (12);
dans lequel la réponse de système du premier filtre IIR (28a) sur base du premier signal de référence (26a) correspond à la réponse de système du deuxième filtre IIR (28b) sur base du deuxième signal de référence (26b) et à une réponse de système du troisième filtre IIR (28c) sur base du troisième signal de référence (26c).

3. Dispositif d'émission selon la revendication 1 ou 2, dans lequel la première structure de filtre (14'a) comporte un premier moyen de calcul (32a) qui est conçu pour calculer une première information de redondance relative à un premier signal de source (34a) et pour combiner la première information de redondance avec le premier signal de source (34a) pour obtenir le premier signal de données (16a), et dans lequel la deuxième structure de filtre (14'b) comporte un deuxième moyen de calcul (32b) qui est conçu pour calculer une deuxième information de redondance relative à un deuxième signal de source (34b) et pour combiner la deuxième information de redondance avec le deuxième signal source (34b) pour obtenir le deuxième signal de données (16b).

4. Dispositif d'émission selon l'une des revendications précédentes, dans lequel le premier (24a) ou le deuxième (24b) combineur est conçu pour combiner le premier (26a) ou le deuxième (26b) signal de référence selon un degré de modulation, dans lequel le degré de modulation est inférieur à un degré de modulation selon lequel est modulé le premier ou le deuxième signal de données (16a, 16b).

5. Dispositif d'émission selon l'une des revendications précédentes, dans lequel le premier et le deuxième filtre IIR (28a, 28b) comportent ce qui suit:
une pluralité de filtres à rétroaction (36a à c) qui sont conçus pour filtrer un segment de signal (38a à c) du premier (27a) ou du deuxième (27b) signal de données étendu pour obtenir une pluralité de segments de signal filtrés (44a à c) selon la pluralité de filtres à rétroaction (36a à c), où deux segments de signal successifs (38a, 38b) se recouvrent partiellement dans une zone de recouvrement (42);
un metteur en forme de signal (52) qui est conçu pour combiner la pluralité de segments de signal filtrés (44a à c) pour obtenir le signal de données filtré (18) et pour rejeter les séquences de recouvrement (46a à c) des segments de signal filtrés (44a à c) associées à la zone de recouvrement (42) du premier (38a) et du deuxième (38b) segment de signal filtré, dans lequel le metteur en forme de signal est conçu pour combiner deux segments de signal filtrés (28a, 38b) de deux segments de signal successifs et pour rejeter une séquence de recouvrement (46b) qui est associée à la zone de recouvrement (42) du deuxième segment de signal filtré (36b) suivant le premier segment de signal filtré (36a).

6. Dispositif d'émission selon la revendication 5, dans lequel le multiplexeur (22) constitue un premier étage de mise en parallèle du traitement du signal du premier et du deuxième signal de données (16a, 16b), dans lequel le premier filtre IIR (28a) constitue un deuxième étage de mise en parallèle du traitement du premier signal de données (16a) et dans lequel le deuxième filtre IIR (28b) constitue un deuxième étage de mise en parallèle du traitement du deuxième signal de données (16b).

7. Dispositif de réception (40; 40'; 50) pour recevoir un signal de sortie (12; 54) aux caractéristiques suivantes:
un démultiplexeur (56) destiné à générer un premier (62a) et un deuxième (62b) signal de réception à partir du signal de sortie reçu (12), où le signal de sortie (12) présente des signaux de référence (26a à c; 72a, 72b) entre les blocs de données (16a' à 16c') du signal de sortie (12) qui sont un préambule connu de tout le système;
une première structure de réception (58a; 58'a) avec un premier filtre d'égalisation (64a) destiné à égaliser le premier signal de réception (62a) et avec un premier séparateur (68a) qui est conçu pour séparer un premier signal de référence (72a) du premier signal de réception égalisé (66a);
une deuxième structure de réception (58b, 58'b) avec un deuxième filtre d'égalisation (64b) destiné à égaliser le deuxième signal de réception (62b) et avec un deuxième séparateur (68b) qui est conçu pour séparer un deuxième signal de référence (72b) du deuxième signal de réception égalisé (66b).

8. Dispositif de réception selon la revendication 7, comportant par ailleurs un moyen de calcul (68a à c) qui est conçu pour déterminer une distance de temps des informations de référence (72a à b) dans le premier (62a) ou le deuxième (62b) signal de réception et pour déterminer une information de correction de phase sur base de la distance de temps.

9. Dispositif de réception selon la revendication 7 ou 8, dans lequel la première (58'a) ou la deuxième (58'b) structure de réception comporte par ailleurs une structure de filtre à action directe (64a à b) avec une pluralité de filtres à action directe qui sont conçus pour filtrer un segment de signal (38a à c) du premier (62a) ou du deuxième (64b) signal de réception pour obtenir une pluralité de segments de signal filtrés (44a à c) selon la pluralité de filtres à action directe, où deux segments de signal successifs (38a, 38b) se recouvrent partiellement dans une zone de recouvrement (42);
un metteur en forme de signal (52) qui est conçu pour combiner la pluralité de sections de signal filtrées (44a à c) pour obtenir un signal de données filtré (66a à b) et pour rejeter les séquences de recouvrement (46a à c) des segments de signal filtrés (44a à c) qui sont associés à la zone de recouvrement d'un premier (38a) et d'un deuxième segment de signal filtré (38b), où le metteur en forme de signal (52) est conçu pour combiner deux segments de signal filtrés (38a, 38b) de deux segments de signal successifs et pour rejeter une séquence de recouvrement (46b) associée à la zone de recouvrement (42) du deuxième segment de signal filtré (36b) suivant le premier segment de signal filtré (36a).

10. Dispositif de réception selon la revendication 7 ou 8, dans lequel la première structure de réception (58'a) comporte une première structure de filtre à rétroaction (82a à b) avec une pluralité de filtres à rétroaction (36a à c), dans lequel la deuxième structure de réception (58'b) comporte une deuxième structure de filtre à rétroaction (82a à b) avec une pluralité de filtres à rétroaction (36a à c), dans lequel le démultiplexeur (22) constitue un premier étage de mise en parallèle du traitement de signal du premier et du deuxième signal de réception (62a, 62b), dans lequel la première structure de filtre à rétroaction (82a) constitue un deuxième étage de mise en parallèle du traitement du premier signal de réception (62a) et la deuxième structure de filtre à rétroaction (82b) constitue un deuxième étage de mise en parallèle du traitement du deuxième signal de réception (62b).

11. Système de transmission (60; 70) aux caractéristiques suivantes:
un dispositif d'émission (10; 20; 20') selon l'une des revendications 1 à 6;
un dispositif de réception (30; 40; 40') selon l'une des revendications 7 à 10;
dans lequel le dispositif d'émission (10; 20; 20') et le dispositif de réception (30; 40; 40') sont couplés par l'intermédiaire d'un support de transmission (88).

12. Procédé d'émission d'un signal de sortie (12) aux caractéristiques suivantes consistant à:
étendre un premier signal de données (16a) par un premier signal de référence (26a) pour obtenir un premier signal de données étendu (27a);
filtrer le premier signal de données étendu (27a) par un premier filtre IIR (28a) pour obtenir un premier signal de données filtré (18a);
étendre un deuxième signal de données (16b) par un deuxième signal de référence (26b) pour obtenir un deuxième signal de données étendu (27b);
filtrer le deuxième signal de données étendu (27b) par un deuxième filtre IIR (28b) pour obtenir un deuxième signal de données filtré (18b);
combiner le premier (18a) et le deuxième (18b) signal de données filtré pour obtenir le signal de sortie (12) sur base des signaux de données filtrés (18a, 18b);
dans lequel une réponse de système du premier filtre IIR (28a) sur base du premier signal de référence (26a) correspond à une réponse de système du deuxième filtre IIR (28b) sur base du deuxième signal de référence (26b);
dans lequel le signal de référence (26a, 26b) est inséré avant (26a-1, 26b-1) et après (26a-2, 26b-2) un bloc de données du signal de données (16a, 16b), et dans lequel un signal de référence filtré obtenu (26a-1', 26b-1') est rejeté sur base du signal de référence précédent (26a-1, 26b-1), de sorte que le signal de sortie (12) présente les signaux de données filtrés (16a', 16b') et les signaux de référence filtrés (26a-2', 26b-2') insérés après le bloc de données et ne présente pas les signaux de référence filtrés (26a-1', 26b-1') insérés avant le bloc de données.

13. Procédé de réception d'un signal de sortie (12; 54), aux caractéristiques suivantes consistant à:
générer un premier (62a) et un deuxième (62b) signal de réception à partir du signal de sortie reçu (12; 54), où le signal de sortie (12) présente des signaux de référence (26a à c; 72a, 72b) entre les blocs de données (16a' à 16c') du signal de sortie (12) qui sont un préambule connu de tout le système;
égaliser (64a) le premier signal de réception (62b);
séparer (68a) un premier signal de référence (72a) du premier signal de réception égalisé (66a);
égaliser (64b) le deuxième signal de réception (62a);
séparer (68b) un deuxième signal de référence (72b) du deuxième signal de réception égalisé (66b); et
filtrer un segment de signal (38a à c) du premier (66a) ou du deuxième (66b) signal de réception égalisé par une pluralité de filtres à rétroaction (36a à c), pour obtenir une pluralité de segments de signal filtrés (44a à c) selon la pluralité de filtres à rétroaction (36a à c), de sorte que deux segments de signal successifs (38a, 38b) se recouvrent partiellement dans une zone de recouvrement (42);
combiner la pluralité de segments de signal filtrés (44a à c) pour obtenir le signal de données filtré (84a à b) et rejeter les séquences se recouvrement (46a à c) des segments de signal filtrés (44a à c) qui sont associés à la zone de recouvrement d'un premier (38a) et d'un deuxième (38b) segment de signal filtré; et
combiner deux segments de signal filtrés (38a, 38b) de deux segments de signal successifs et rejeter une séquence de recouvrement (46b) associée à la zone de recouvrement (42) du deuxième segment de signal filtré (36b) suivant le premier segment de signal filtré (36a)

14. Procédé selon la revendication 13, comportant par ailleurs l'étape suivante consistant à:
synchroniser la génération du premier (62a) et du deuxième (62b) signal de réception par rapport à un début et/ou à une fin d'une grandeur de bloc, à une fréquence ou une phase du signal de sortie reçu (12) ou au premier (62a) et au deuxième (62b) signal de réception sur base d'un filtrage et d'une détection (106) d'un signal de référence (26a-2', 26b-2', 26c-2') qui est émis par le procédé selon la revendication 22.

15. Programme d'ordinateur avec un code de programme pour la mise en oeuvre du procédé selon l'une des revendications 12 à 14 lorsque le programme est exécuté sur un ordinateur.
